(19) Europäisches Patentamt / European Patent Office / Office européen des brevets

(11) **EP 4 210 029 B1**

(12) **EUROPEAN PATENT SPECIFICATION**

(45) Date of publication and mention
of the grant of the patent:
**20.05.2026 Bulletin 2026/21**

(21) Application number: **20957720.4**

(22) Date of filing: **16.10.2020**

(51) International Patent Classification (IPC):
**G09C 1/00** (2006.01)   **G06F 7/499** (2006.01)
**H04L 9/08** (2006.01)

(52) Cooperative Patent Classification (CPC):
**H04L 9/085; G06F 7/49936**

(86) International application number:
**PCT/JP2020/039078**

(87) International publication number:
**WO 2022/079891 (21.04.2022 Gazette 2022/16)**

(54) **CONFIDENTIAL MSB NORMALIZATION SYSTEM, DISTRIBUTED PROCESSING DEVICE, CONFIDENTIAL MSB NORMALIZATION METHOD, AND PROGRAM**

NORMALISIERUNGSSYSTEM FÜR VERTRAULICHE MSB, VERTEILTE VERARBEITUNGSVORRICHTUNG, NORMALISIERUNGSVERFAHREN FÜR VERTRAULICHE MSB UND PROGRAMM

SYSTÈME DE NORMALISATION DE MSB CONFIDENTIELLE, DISPOSITIF DE TRAITEMENT RÉPARTI, PROCÉDÉ DE NORMALISATION DE MSB CONFIDENTIELLE, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.07.2023 Bulletin 2023/28**

(73) Proprietor: **NTT, Inc.**
**Tokyo 100-8116 (JP)**

(72) Inventor: **IKARASHI, Dai**
**Musashino-shi, Tokyo 180-8585 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**WO-A1-2018/034079**

- DAN BOGDANOV ET AL: "High-performance secure multi-party computation for data mining applications", INTERNATIONAL JOURNAL OF INFORMATION SECURITY, SPRINGER, BERLIN, DE, vol. 11, no. 6, 9 September 2012 (2012-09-09), pages 403 - 418, XP035125356, ISSN: 1615-5270, DOI: 10.1007/S10207-012-0177-2
- FATTANEH BAYATBABOLGHANI ET AL: "Secure Fingerprint Alignment and Matching Protocols", 10 February 2017 (2017-02-10), XP055528729, Retrieved from the Internet <URL:https://arxiv.org/pdf/1702.03379v2.pdf> [retrieved on 20181129]
- KAMM LIINA ET AL: "Secure floating point arithmetic and private satellite collision analysis", INTERNATIONAL JOURNAL OF INFORMATION SECURITY (IJIS), SPRINGER, HEIDELBERG, DE, vol. 14, no. 6, 18 December 2014 (2014-12-18), pages 531 - 548, XP035577326, ISSN: 1615-5262, [retrieved on 20141218], DOI: 10.1007/S10207-014-0271-8
- MEHRDAD ALIASGARI ET AL: "Secure Computation on Floating Point Numbers", IACR, INTERNATIONAL ASSOCIATION FOR CRYPTOLOGIC RESEARCH, vol. 20121210:185402, 10 December 2012 (2012-12-10), pages 1 - 31, XP061007014

EP 4 210 029 B1

- **KAMM LIINA; WILLEMSON JAN: "Secure floating point arithmetic and private satellite collision analysis", INTERNATIONAL JOURNAL OF INFORMATION SECURITY (IJIS), SPRINGER, HEIDELBERG, DE, vol. 14, no. 6, 18 December 2014 (2014-12-18), DE
, pages 531 - 548, XP035577326, ISSN: 1615-5262, DOI: 10.1007/s10207-014-0271-8**
- **IGARASHI, DAI: "Secure Real Number Operations for Secure A1 - 0(lpl)-Bit Communication and 0(1)-Round Right Shift Protocol", IPSJ SYMPOSIUM SERIES: MULTIMEDIA, DISTRIBUTED, COOPERATIVE, AND MOBILE SYMPOSIUM, IPSJ, JAPAN, 14 October 2019 (2019-10-14), Japan
, pages 1557 - 1564, XP009530110, ISSN: 1882-0840**

**Description**

[Technical Field]

The present invention relates to a technique for aligning the most significant bit (hereinafter, also referred to as Most Significant Bit (MSB)) with a predetermined bit position (hereinafter, also referred to as "MSB alignment") in secure computation.

[Background Art]

In plaintext, a multiply-accumulate operation is a repetition of addition, but in secure computation based on secret sharing, it is necessary to be able to perform parallel processing in order to improve computation efficiency (see NPL 1 and NPL 2). In addition, in consideration of the accuracy, it is necessary to construct a special computation for the sum and the product sum. NPL 3 generally discloses three private fingerprint alignment and matching protocols, based on what are considered to be the most precise and efficient fingerprint recognition algorithms, which use minutia points.

[Citation List]

[Non Patent Literature]

[NPL 1] Takashi Nishide, Takuma Amada, et al. "Multiparty Computation for Floating Point Arithmetic with Less Communication over Small Fields," Transactions of the Information Processing Society of Japan, Vol. 60, No. 9, pp. 1433-1447, 2019.
[NPL 2] Randmets, J., "Programming Languages for Secure Multi-party Computation Application Development", PhD thesis. University of Tartu. 2017.
[NPL 3] Fattaneh Bayatbabolghani ET AL: "Secure Fingerprint Alignment and Matching Protocols", 10 February 2017.

[Summary of Invention]

[Technical Problem]

Although it is desired to reduce the MSB to be constant at the time of input because the product sum has a high bit output, if the product sum is simply shifted to the right, the small input are lost and the accuracy is lowered.

An object of the present invention is to provide a secure MSB normalization system, a distributed processing apparatus, a secure MSB normalization method, and a program capable of performing MSB alignment while maintaining accuracy by shifting the entire vector all at once by shifting the MSB (called vector MSB) of the data with the largest absolute value among the elements included in the vector to a predetermined bit position (called vector MSB normalization).

[Solution to Problem]

In order to solve the above problem, the present disclosure provides a secure MSB normalization system, a distributed processing apparatus, a secure MSB normalization method, and a program, having the features of the respective independent claims. The dependent claims relate to preferred embodiments. According to one aspect of the present invention, a secure MSB normalization system includes n distributed processing apparatuses. Each of the n distributed processing apparatuses includes a bit decomposition unit, a logical sum acquisition unit, a shift amount acquisition unit, and a shift unit. The n bit decomposition units decompose a vector $[[\vec{a}]]^P$ of a $(k, n)$-secret shared share into bits and obtain a bit representation $[[\vec{a}]]^{2^L}$ of the vector $[[\vec{a}]]^P$, the n logical sum acquisition units obtain a logical sum $[[A_i]]^2$ of all elements for a vector $[[\vec{a_i}]]$ at each bit position of the bit representation $[[\vec{a}]]^{2^L}$, the n shift amount acquisition units obtain a share $<<\rho>>^p$ obtained by distributing a shift amount p for shifting the most significant bit of a logical sum $[[A_0]]^2, ..., [[A_{L-1}]]^2$ to a fixed position by $(k, n)$-replica secret sharing by a modulus p, and the n shift units obtain a vector $[[2^\rho \vec{a}]]^p$ in which each element of the vector $[[\vec{a}]]^p$ is shifted left by p bits.

In order to solve the above problem, according to another aspect of the present invention, the distributed processing apparatus is included in a secure MSB normalization system. The distributed processing apparatus includes a bit decomposition unit configured to obtain a bit representation $[[\vec{a}]]^{2^L}$ of a vector $[[\vec{a}]]^P$ by bit-decomposing the vector $[[\vec{a}]]^P$ of a $(k, n)$-secret shared share together with $(n-1)$ distributed processing apparatuses, a logical sum acquisition unit configured to obtain a logical sum $[[A_i]]^2$ of all elements for a vector $[[\rightarrow a_i]]$ at each bit position of the bit representation $[[\rightarrow a]]^{2^L}$ together with the (n-1) distributed processing apparatuses, a shift amount acquisition unit configured to obtain a share $<<\rho>>^p$ obtained by distributing a shift amount p for shifting the most significant bit of a logical sum $[[A_0]]^2, ..., [[A_{L-1}]]^2$ to a fixed position by (k, n)-replica secret sharing by a modulus p together with the (n-1) distributed processing apparatuses, and a shift unit configured to obtain a vector $[[2^p \rightarrow a]]^p$ in which each element of the vector $[[\rightarrow a]]^P$ is shifted left by p bits together with the (n-1) distributed processing apparatuses.

[Advantageous Effects of Invention]

According to the present invention, there is an effect that MSB alignment can be performed while maintaining accuracy.

[Brief Description of Drawings]

[Fig. 1] Fig. 1 is a diagram illustrating a configuration example of a secure MSB normalization system according to first, second, and third embodiments.
[Fig. 2] Fig. 2 is a diagram illustrating an example of a processing flow of a secure MSB normalization system according to the first embodiment.
[Fig. 3] Fig. 3 is a functional block diagram of a distributed processing apparatus according to the first embodiment.
[Fig. 4] Fig. 4 is a diagram illustrating an example of a processing flow of a secure MSB normalization system according to the second embodiment.
[Fig. 5] Fig. 5 is a functional block diagram of a distributed processing apparatus according to the second embodiment.
[Fig. 6] Fig. 6 is a diagram illustrating an example of a processing flow of a secure MSB normalization system according to the third embodiment.
[Fig. 7] Fig. 7 is a functional block diagram of a distributed processing apparatus according to the third embodiment.
[Fig. 8] Fig. 8 is a view illustrating actual machine experiment results.
[Fig. 9] Fig. 9 is a view illustrating a configuration example of a computer to which the present method is applied.

[Description of Embodiments]

Hereinafter, embodiments of the present invention will be described. In the diagrams used for the following description, the same reference numerals are given to components having the same functions or steps of performing the same processing, and repeated description thereof will be omitted. In the following descriptions, symbols "^" or the like that will be used in the text that should naturally be placed above the characters that follow them are instead placed before the characters due to the limitation of the text notation. In formulas, these symbols are written at the original positions. Further, processing performed in units of respective elements such as vectors and matrices will be applied to all the elements of the vector or the matrices unless otherwise specifically noted.

<First Embodiment>

First, the notation in the present embodiment will be described.

<Notation>

◎ k: A threshold value of secret sharing. For example, 2.
◎ n: The number of secret sharing distributions, in other words, the number of secure computation parties. For example, 3.
◎ P: Prime number. In the present embodiment, the Marsenne prime number $2^{61}-1$ is assumed, and the processing efficiency is improved.
◎ p: The number of bits of P. When P is the Marsenne prime, it is also a prime number, which is 61.
◎ Q: The order of the quotient ring. It means a general order including P, p and the order used for the floating point exponent part. Especially when used for the share of the exponent part of the floating point, $2^{13}-1$ is assumed.
◎ L: The maximum bit length of the data to be stored. P is assumed to be smaller than p.
◎ λ: The maximum bit length of the exponent part to be stored. It is assumed 10 or less.

◎ $[[x]]^y$: A share obtained by distributing a mod y element x by (k, n)-secret sharing.

◎ $<x>^y$: A share obtained by distributing a mod y element x by (k, k)-additive secret sharing.

◎ $<<x>>^y$: A share obtained by distributing a mod y element x by (k, n)-replica secret sharing. Since it is (k, n)-secret sharing, the protocol applicable to the share in the form of $[[x]]^y$ can also be applied to this share. In this case, it means that the nature of the replica secret sharing is utilized in particular.

◎ $[[x]]2^m$: A share in which m shares in $[[x]]^2$ format are lined up. It may be regarded as a bit representation of a numerical value. In addition, A^B in the subscript means $A^B$, and A_B means $A_B$.

◎ $\rho \circ \vec{a}$: A vector obtained by applying rotation p to a vector $\vec{a}$. Since the rotation is both a number and a permutation, it is distinguished from the multiplication $\rho \vec{a}$ for each element.

◎ xy: x and y are equal as real numbers on the computer. That is, the difference is within a fixed error range.

◎ a/d: Integer division rounded down to the nearest whole number. In particular, the integer division with a power of 2 is equal to a right shift.

[Representation. 1]

$$\circledcirc \; \frac{a}{d} : \text{Real number division}$$

◎ {proposition}: 1 if the proposition holds, 0 if it does not hold.

Next, two secret sharing, (k, n)-secret sharing and (k, k)-additive secret sharing, used in the present embodiment will be described.

<(k, n)-Secret Sharing>

(k, n)-Secret sharing is a security technology that divides the input plaintext into n fragments (called shares), distributes them to n different subjects (called parties), restores if any k shares are available, and no information about plaintext can be obtained with less than k-1. For example, examples thereof include Shamir's secret sharing and replica secret sharing. In the present embodiment, a set that is distributed by (k, n)-secret sharing and collects all shares whose plaintext is a certain value x (also referred as a (k, n)-secret sharing value) is expressed as [[x]]. For each share, the share of a party r is expressed as $[[x]]^y_r$. Here, r=0, ..., n-1. Since the secret sharing value is usually distributed to each party, no one owns it and it is virtual. Also, a column of (k, n)-secret sharing values whose plaintext column is $\vec{x}$ is expressed as $[[\vec{x}]]$.

<(k, k)-Additive Secret Sharing>

(k, k)-secret sharing is (k, n)-secret sharing when n=k. It cannot be restored unless the shares of all parties are collected. (k, k)-secret sharing by replica secret sharing, in particular, is called additive secret sharing and is the simplest way to restore plaintext by simply adding k shares. In the present embodiment, under a modulus y, it is distributed by (k, k)-additive secret sharing, a set (also referred to as (k, k)-additive secret sharing value) that collects all the shares whose plaintext is a certain value x is expressed as $<x>^y$, and the share of the party r is expressed as $<x>^y_r$. In addition, a column of (k, k)-additive secret sharing values whose plaintext column is $\vec{x}$ is expressed as $<\vec{x}>^P$.

First, some protocols used in the secure MSB normalization system according to the first embodiment will be described.

<Multiplicative Rotation Protocol>

Input: A (k, n)-secret shared numerical share $[[a]^P$, and a share $<<\rho>>^p$ obtained by distributing a rotation amount p by replica secret sharing

Output: A (k, n)-secret shared share $[[2^p a]]^P$.

Processing: Obtain a share $[[2^p a]]^P$ obtained by distributing a value $2^p a$ obtained by p bit rotation of a numerical value a by (k, n)-secret sharing using the numerical share $[[a]]^P$ and the share $<<\rho>>^P$. In this example, k=2 and n=3. Details of the processing will be described below.

1 : Round 1
2 : Convert a numerical share $[[a]]^P$ to (k, k)-additive secret shared share $<a>^P$. In this example, parties 0 and 1 have a share $<a>^p$. The conversion from (k, n)-secret sharing to (k, k)-additive secret sharing can be performed by known techniques. For example, Reference 1 is used.

(Reference 1) Kikuchi, R., Ikarashi, D., Matsuda, T., Hamada, K. and Chida, K., "Efficient Bit-Decomposition and Modulus-Conversion Protocols with an Honest Majority," Information Security and Privacy - 23rd Australasian Conference, ACISP 2018, Wollongong, NSW, Australia, July 11-13, 2018, Proceedings (Susilo, W. and Yang, G., eds.), Lecture Notes in Computer Science, Vol. 10946, Springer, pp. 64-82 (online).

3 : Parties 0 and 1 share random number $r_{01}$, and parties 1 and 2 share random number $r_{12}$. The random numbers may be generated by one of the parties sharing the random numbers and passed to the other, or may be generated by a third party and passed to the corresponding party, or shared using tokens or the like.

4 : Party 0 calculates a below representation and sends the result to Party 2.

[Representation 2]

$$b_0 := 2^{<<\rho>>_{01}^p} < a >_0^P - r_{01}$$

5 : Party 1 calculates a below representation and sends the result to Party 0.

[Representation 3]

$$b_1 := 2^{<<\rho>>_{12}^p} \left( 2^{<<\rho>>_{01}^p} < a >_1^P + r_{01} \right) - r_{12}$$

6 : Round 2

7 : Party 0 calculates a below representation.

[Representation 4]

$$< c >_0^P := 2^{<<\rho>>_{20}^p} b_1$$

8 : Party 2 calculates a below representation.

[Representation 5]

$$< c >_2^P := 2^{<<\rho>>_{20}^p} \left( 2^{<<\rho>>_{12}^p} b_0 + r_{12} \right)$$

9 : Round 3

10 : A $(k, k)$-additive secret shared share $<c>^P$ is converted into a $(k, n)$-secret shared share $[c]^P$ and output. Here, $c=2^\rho a$ is established. The conversion from $(k, k)$-additive secret sharing to $(k, n)$-secret sharing can be performed by known techniques. For example, Reference 1 is used.

<Flag Column → Numerical Share Conversion Protocol>

Input: A bit share vector $[[\vec{f}]]^2$ of a length p. However, there is only one 1 in $\vec{f}$.

Output: mod p share $[[b]]^p$ at position 1 in $\vec{f}$

Processing: Obtain a share $[[2^\rho a]]^P$ obtained by distributing a position b of 1 existing in $\vec{f}$ by $(k, n)$-secret sharing using the bit share vector $[[\vec{f}]]^2$. Details of the processing will be described below.

1: A share $<<\rho>>^p$ obtained by distributing a uniform random number p by $(k, n)$-replica secret sharing by mod p is generated.

2: A public value $\rho \circ \vec{f}$ is calculated by a public value output rotation protocol. Since p is a uniform random number and $\vec{f}$ is determined to be 1 only at one position, $\rho \circ \vec{f}$ is a uniform random number on rotation expressing a numerical value as a bit position, and it is safe even if it is opened to the public. The public value output rotation protocol is a protocol that obtains a $\rho \circ \vec{f}$ (public value) obtained by rotating the vector $\vec{a}$ by p by inputting the vector $[[\vec{a}]]$ of the $(k, n)$-secret shared share and the $(k, n)$-replica secret shared rotation amount p and can be realized by the well-known technology. For example, the space of random permutation in the public value output random permutation protocol of Reference 2 can be limited to random rotation.

(Reference 2) Dai IGARASHI, Koki HAMADA, Ryo KIKUCHI, Koji CHIDA, "Improvement of secure computation radix sort aiming at statistical processing of Internet environment response 1 second," SCIS 2014 The 31st Symposium on Cryptography and Information Security.

3: The position of 1 in $\rho \circ \to f$ is obtained and the position is set as b'. b' is established by the representation b'=b+p with respect to the original 1 position b.

4: $<<b>>^p = b'-<<\rho>>^p$ is calculated and output.

Even in a case where the length of the input bit share vector $[[\to f]]^2$ is shorter than p, this protocol can be applied by padding $[[0]]^2$ to the high-order bits.

Hereinafter, the vector MSB normalization realized in the present embodiment will be described.

<Vector MSB Normalization Protocol>

Input: A vector $[[\to a]]^P$ of a share

Parameter: The maximum number of bits of input L and a vector length m.

The output: $[[2\rho \to a]]^P$, $<<\rho>>^P$, where the vector MSB of $2\rho \to a$ is the L-1-th bit.

Processing: The entire vector $[[\to a]]^P$ is shifted so that the MSB (vector MSB) of the data having the largest absolute value among the elements included in the vector $[[\to a]]^P$ is aligned with the fixed position (here, L-1-th bit)), and the vector $[[2\rho \to a]]^p$ after the shift and the shift amount $<<\rho>>^p$ are obtained. Details of the processing will be described below.

1: The bit representation $[[\to a]]^{2^L}$ of $[[\to a]]^P$ is obtained by bit decomposition. The bit decomposition can be performed by a known technique. For example, Reference 1 is used.

2: the OR of all elements are taken for each bit position $0 \le i < L$ vector $[[\to a_i]]^2$ of $[[\to a]]^{2^L}$. When $a_s$ is the s-th element of $\to a$, s=0, 1, ..., m-1, the bit representation of $[[a_s]]$ is $[[a_s]]^{2^L}$, and the share of the i-th bit position of $[[a_s]]^{2^L}$ is $[[(a_i)_s]]^2$, the vector $[[\to a_i]]$ is $[[\to a_i]]=([[(a_i)_0]]^2, ..., [[(a_i)_{m-1}]]^2)$, and the logical sum to be obtained is $[[A_i]]^2:=[[(a_i)_0]]^2$ OR ... OR $[[(a_i)_{m-1}]]^2$.

3-1: Inductively, $0 \le i < L-1$, let $[[f_i]]^2:=[[f_{i+1} V A_i]]^2$. Here, $[f_{L-1}]^2:=[[A_{L-1}]]^2$ is established. Up to this point, the bit representation $f=(f_{L-1}, f_{L-2}, ..., f_0)$ has a form in which 01s are lined up with the MSB as the boundary, such as 0, 0, 0, 1, 1, ..., 1.

3-2: Maximum p-L pieces of $[[1]]^2$ are inserted into the low-order bits, and $([[f'_0]]^2, ... [[f'_{L'-1}]]^2):=([[1]]^2, ..., [[1]]^2, ..., [[1]]^2, [f_0]^2, ... [[f_{L-1}]]^2$ is established. L' is a number obtained by adding the number of $[[1]]^2$ inserted to L. By this processing, the MSB position is defined even when all the elements of $\to a$ are 0.

3-3: In $0 \le i < L'-1$, $[[x_i]]^2:=[[f'_i \text{ xor } f'_{i+1}]]^2$ is established. Here, $[x_{L'-1}]^2:=[[A_{L-1}]]^2$ is established. Up to this point, the bit representation $x=(x_{L'-1}, x_{L'-2}, ..., x_0)$ is a flag such as 0, 0, 0, 1, 0, ..., 0 where only the MSB position is 1.

4: By the above-mentioned <Flag Column $\to$ Numerical Share Conversion Protocol>, $[[X_{L'-1}]]^2$, $[[X_{L'-2}]]^2$, ..., and $[[X_0]]^2$ are converted into $<<\rho>>^P$. However, note that it is in descending order.

5: By the above-mentioned <Multiplicative Rotation>, the (k, n)-secret shared share $[[2\rho \to a]]^p$ is obtained from the vector $[[\to a]]^P$ of the share and the share $<<\rho>>^p$ which is obtained by distributing the rotation amount by replica secret sharing and output. However, the multiplicative rotation may be performed by other known techniques.

Hereinafter, the vector MSB normalization system that realizes the above-mentioned vector MSB normalization will be described.

<Vector MSB Normalization System according to First Embodiment>

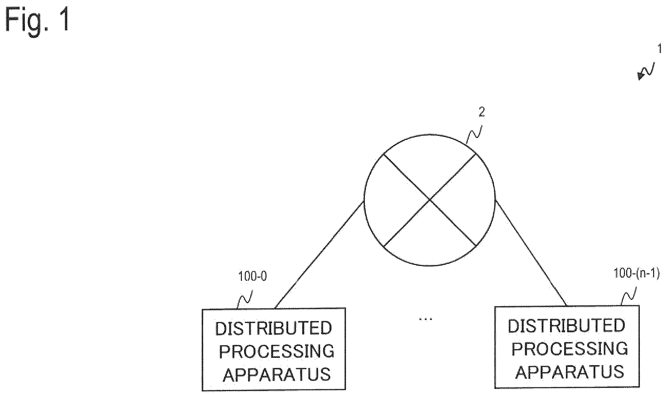

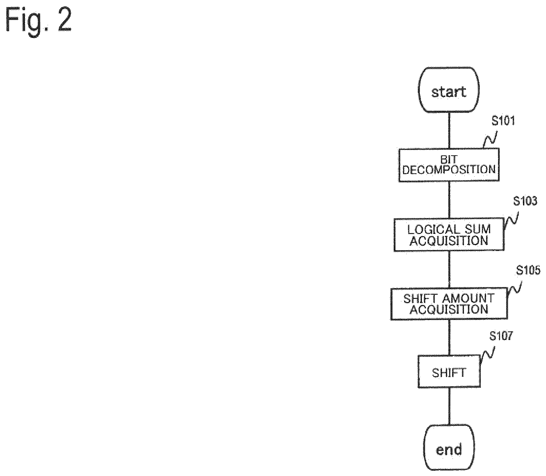

Fig. 1 illustrates a configuration example of the vector MSB normalization system 1 according to a first embodiment, and Fig. 2 illustrates an example of a processing flow of the vector MSB normalization system 1.

The vector MSB normalization system 1 includes n distributed processing apparatuses 100-r. Here, n is any integer of 3 or more, and r = 0, 1, ..., n-1. The n distributed processing apparatuses 100-r can communicate with each other via a communication line 2.

The vector MSB normalization system 1 inputs a vector $[[\to a]]^P$ of a share $[[a_s]]^P$ which is obtained by distributing each element $a_s$ of a vector $\to a$ by (k, n)-secret sharing by a modulus p, performs the vector MSB normalization, and obtains and outputs the vector $[[2\rho \to a]]^p$ and the shift amount $<<\rho>>^p$ after the vector MSB normalization. The parameters are the maximum bit length L of the share $[[a_s]^P$ and the vector length m of the vector $[[\to a]]^P$.

The distributed processing apparatus is a special computer configured by loading a special program into a publicly known or dedicated computer having, for example, a central processing unit (CPU), a main storage device (RAM: Random Access Memory), and the like. The distributed processing apparatus executes each processing under the control of the central processing unit, for example. The data input to the distributed processing apparatus and the data obtained by each processing are stored in the main storage device, for example, and the data stored in the main storage device is read out to the central processing unit as needed and is used for processing. At least a part of each processing unit of the distributed processing apparatus may be configured by hardware such as an integrated circuit. Each storage unit included in the distributed processing apparatus can be configured by, for example, a main storage device such as random access memory (RAM) or middleware such as a relational database or a key-value store. However, each storage unit does not necessarily have to be provided inside the distributed processing apparatus, and is configured by an auxiliary storage device composed of semiconductor memory elements such as a hard disk, an optical disc, or a flash memory, and is a distributed processing apparatus. It may be configured to be provided outside the distributed processing apparatus.

[Distributed Processing Apparatus 100-r]

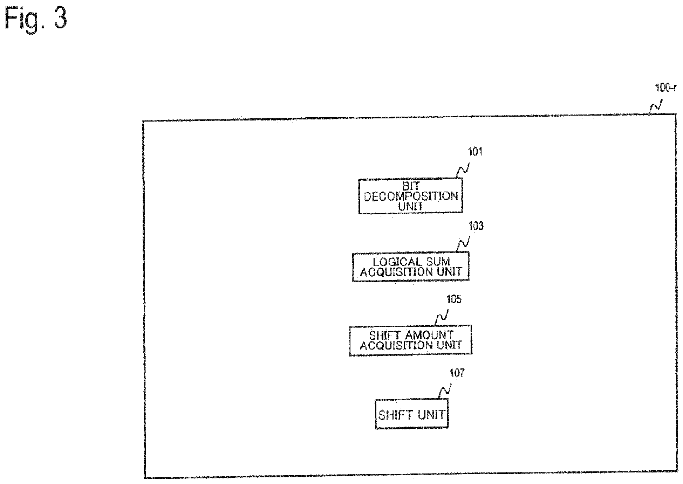

Fig. 3 illustrates an example of a functional block diagram of the distributed processing apparatus 100-r.
The distributed processing apparatus 100-r includes a bit decomposition unit 101, a logical sum acquisition unit 103, a shift amount acquisition unit 105, and a shift unit 107.
Hereinafter, the processing of each part will be described with reference to Fig. 2.

<Bit Decomposition Unit 101>

The n bit decomposition units 101 receive a vector $[[\overrightarrow{a}]]^P$ of a (k, n)-secret shared share, and obtain a bit representation $[[\overrightarrow{a}]]^{2^L}$ of the vector $[[\overrightarrow{a}]]^P$ by the bit distribution (S101).

<Logical Sum Acquisition Unit 103>

The n logical sum acquisition units 103 receive the bit representation $[[\overrightarrow{a}]]^{2^L}$ and obtain a logical sum $[[A_i]]^2$ of all elements for the vector $[[\overrightarrow{a_i}]]$ of each bit position $0 \leq i < L$ (S103). Here, assuming that the s-th element of the vector $\overrightarrow{a}$ be $a_s$, s=0, 1, ..., m-1, a bit representation of $[[a_s]]$ be $[[a_s]]^{2^L}$, and the share of the i-th bit position of $[[a_s]]^{2^L}$ be $[[(a_i)_s]]^2$, the vector $[[\overrightarrow{a_i}]]$ is $[[\overrightarrow{a_i}]]=([[(a_i)_0]]^2, ..., [[(a_i)_{m-1}]]^2)$ and the logical sum to be obtained is $[[A_i]]^2:=[[(a_i)_0]]^2 OR \ ... \ OR [(a_i)_{m-1}]]^2$.

<Shift Amount Acquisition Unit 105>

The n shift amount acquisition units 105 receive the logical sum $[[A_i]]^2$, and obtain a shift amount $<<\rho>>^P$ for shifting the MSB of the vector $[[\overrightarrow{A}]]^2=([[A_0]]^2, ..., [[A_{L-1}]]^2)$ to the fixed position using the maximum number of bits $L \leq p-1$ as a parameter (s105).
For example, the shift amount $<<\rho>>^P$ is obtained as follows.
First, the n shift amount acquisition units 105 assume $[[f_{L-1}]]^2:=[[A_{L-1}]]^2$, and in an inductive manner in $0 \leq i < L-1$, assume $[[f_i]]^2:=[[f_{i+1}VA_i]]^2$. By this processing, a bit representation $f=(f_{L-1}, f_{L-2}, ..., f_0)$ has a form in which 01s are lined up with the MSB as the boundary, such as 0, 0, 0, 1, 1, ..., 1.
Next, the n shift amount acquisition units 105 assume $[[x_{L-1}]]^2:=[[A_{L-1}]]^2$, and in $0 \leq i < L-1$, assume $[[x_i]]^2:=[[f_i xor f_{i+1}]]^2$. By this processing, the bit representation $x=(x_{L-1}, x_{L-2}, ..., x_0)$ becomes a flag such as 0, 0, 0, 1, 0, ..., 0 where only the MSB position becomes 1.
Finally, the n shift amount acquisition units 105 convert the columns $[[x_{L-1}]]^2, [[x_{L-2}]]^2, ..., [[x_0]]^2, [1]]^2, ..., [[1]]^2$ of the length p into $<<\rho>>^P$ by the above-mentioned <Flag Column → Numerical Share Conversion Protocol>.

<Shift Unit 107>

The n shift units 107 receive $[[\overrightarrow{a}]]^p$ and $<<\rho>>^P$, obtain each the vector $[[2^{\rho}\overrightarrow{a}]]^p$ which is obtained by left-shifting each element of $[[\overrightarrow{a}]]^P$ by bits (S107) and output the vector. For example, by the above-mentioned <Multiplicative Rotation>, the (k, n)-secret shared share $[[2^p a]]^P$ is obtained from the share vector $[[\overrightarrow{a}]]^P$ and the replica secret shared share $<<\rho>>^P$ of the rotation amount.

<Effect>

With such a configuration, MSB matching can be performed while maintaining accuracy.

<Second Embodiment>

The part different from the first embodiment will be mainly described.

In the second embodiment, the fixed-point vector product sum using the vector MSB normalization of the first embodiment will be described. First, some protocols used in the fixed-point vector product sum according to the second embodiment will be described.

<Shift Amount Secure Left And Right Shift Protocol>

Input: A numerical share $[[a]]^P$, a share of a positive and negative left shift amount $<<\rho>>^Q$,
Parameters: An upper limit $M_{max}$ which can be taken by the MSB position of the input. and the maximum MSB position Mlim which is allowed by the share, and
Output: A p bit shifted value $[[s]]^P$.

1. First, when $u := Mlim - M_{max} + 1$, the following representation is used.

$$[\text{Representation 6}]$$

$$d := \left\lceil \frac{M_{max} - 1}{u} \right\rceil$$

u indicates the size of the range of the right shift amount that can be covered by one shift amount secure right shift (covers 0 to (Mlim-$M_{max}$)) and d indicates the number of secure right shift amounts required to make a right shift in the range of 1 to ($M_{max}$-1) bits. When the right shift amount is zero or less, the left shift is sufficient, and when the right shift amount is $M_{max}$ or more, the output is always zero.

2: $<<\rho>>^P$ is calculated by modulus transformation using quotient transition. The modulus conversion using the quotient transition can be performed by known techniques. For example, Reference 1 is used.

3: By comparison of magnitude, the followings are calculated:

$$[[f_0]]^2 := [[\{\rho \geq -M_{max}+1\}]]^2,$$

$$[[f_1]]^2 := [[\{\rho \geq -M_{max}+1+u\}]]^2, \ldots,$$

$$[[f_{d-1}]]^2 := [[\{\rho \geq -M_{max}+1+(d-1)u\}]]^2,$$

and

$$[[f_L]]^2 := [[\{\rho \geq 0\}]]^2$$

Note that $f_L$, $f_{d-1}$, $f_{d-2}$, ... are transitive flags.

4. By mod 2 $\rightarrow$ mod p conversion, from $[[f_1]]^2$, $[[f_2]]^2$, ..., $[[f_{d-1}]]^2$, $[[f_L]]$ to $<<f_1>>^P$, $<<f_2>>^P$, ..., $<<f_{d-1}>>^P$, $<<f_L>>^P$ are calculated. Here, $<<f_0>>^p$ is unnecessary. Note that the mod 2 $\rightarrow$ mod P conversion can be performed by a known technique. For example, Reference 1 is used.

5: $<<\rho'>>^P := <<\rho>>^P + M_{max} - 1 - u\Sigma_{1 \leq i < d}<<^P + ((d-1)u - M_{max}+1)<<f_L>>^P$ is calculated.

6: $[[b]]^P := [[2^{\rho'}a]]^P$ is calculated by <Multiplicative Rotation Protocol> using $[[a]]^P$ and $<<\rho'>>^P$. However, known techniques may be used as the multiplicative rotation protocol.

7: By a collective shift amount public right shift, the followings are calculated:

$$[[c_0]]^P := [[2^{\rho'}a/2^{M_{(max)}-1}]]^P,$$

$$[[c_1]]^P := [[2^{\rho'}a/(2^{M_{(max)}-1-u})]]^P, \ldots,$$

and

$$[[c_{d-1}]]^P := [[2^{\rho'}a / (2^{M\_(max)-1-(d-1)u})]]^P.$$

8: By the mod 2 → mod P conversion, $[[f_0]]^P$, $[[f_1]]^P$, ..., $[[f_{d-1}]]^P$, and $[[f_L]]^P$ are calculated. Here, $[[f_0]]^P$ is required.

9: By sum of products, $[[s]]:=[[c_0]]^P[[f_0]]^P+([[c_1]]-[[c_0]])^P[[f_1]]^P+ ... + ([[c_{d-1}]] - [[c_{d-2}]])^P[[f_{d-1}]]^P+ ([[b]]^P- [[c_{d-1}]]^P)$ $[[f_L]]^P$ is calculated and output. It is noted that this representation is a selection gate for a transitional flag.

The fixed-point vector product sum realized in the present embodiment will be described below.

<Fixed-Point Vector Product-Sum Protocol>

Input: Fixed-point number vectors $[[\vec{a}]]^P$ and $[[\vec{b}]]^P$ Parameter: Vector length m
Output: $[[c]]^P$, where $\Sigma_{0 \leq l < m} a_i b_i \fallingdotseq C$

1: By the vector MSB normalization protocol of the first embodiment, the fixed-point number vectors $[[\vec{a}]]^P$ and $[[\vec{b}]]^P$ are vector MSB normalized, respectively, and the vectors whose MSB position are adjusted and the shift amounts $([[2^{\rho\_a}\vec{a}]]^P, <<\rho_a>>^P)$, $([[2^{\rho\_b}\vec{b}]]^P, <<\rho_b>>^P)$ are obtained.

2: $[[\rho_a]]^Q$ and $[[\rho_b]]^Q$ are obtained by mod p → mod Q conversion from $<<\rho_a>>^P$, $<<\rho_e>>^P$. The mod p → mod Q conversion can be performed by a known technique. For example, Reference 1 is used. Further, a modulus conversion other than Reference 1 may be used. For example, the technique of Reference 1 needs to satisfy that there are a predetermined number of free bits (hereinafter, also referred to as conditions for quotient transition). However, the modulus conversion that does not satisfy the conditions for quotient transition may be used. Hereinafter, a modulus conversion that does not satisfy the conditions for quotient transition will be described.

<Non-Quotient Transition Modulus Conversion Protocol>

Input: A (k, n)-secret shared share $[[a]]^P$
Parameter: The number of bits $|p|$ of the p
Output: A (k, n)-secret shared share $[[a]]^Q$ by different modulus Q

2-1: The share $[a]^p$ is converted into (k, k)-additive secret shared share $<a>^p$. With k = 2, parties p0 and p1 have a share $<a>^p$. The conversion from (k, n)-secret sharing to (k, k)-additive secret sharing can be performed by known techniques. For example, Reference 1 is used.

2-2: The party p0 calculates $a'_0$ : $<a>^p_0+(2^{|p|}-p)$ by addition on Z without performing mod p, and the each bit of $a'_0$ is subjected to (k, n)-secret sharing to obtain a share $[[a'_0]]^{2|p|}$ of bit expression. The bit decomposition can be performed by a known technique. For example, Reference 1 is used.

2-3: The party p1 performs (k, n)-secret sharing of each bit of $<a>^P1$ to obtain a share $[[a_1]]^{2^{\wedge}|p|}$ of a bit representation.

2-4: A share $[[a'_0+a_1]]^{2^{\wedge}(|p|+1))}$ of the bit representation of $a'_0+a_1$ is obtained by an addition circuit. After the addition circuit computation, the bit length increases by 1 from $|p|$ to $|p|+1$.

2-5: $[[q]]^2$ is made the most significant bit of $[[a'_0+a_1]]^{2^{\wedge}(|p|+1)}$. q is the quotient of the share $<a>^p$, that is, q when expressed as $<a>_0+<a>_1=a+qp$.

2-6: $[[q]]^Q$ are obtained from $[[q]]^2$ by mod 2 → mod Q conversion. For example, the mod 2 → mod Q conversion can be performed by a known technique. For example, Reference 1 is used.

2-7: The parties $P_0$ and $P_1$ obtain $<a>^P_0$ mod Q and $<a>^P_1$ mod Q from $<a>^P_0$ and $<a'>^Q$, respectively, and satisfy $<a'>^Q$. Here, $a'= a + QP$ mod Q is established.

2-8: The (k, k)-secret shared share $<a'>^Q$ is converted to (k, n)-secret-sharing to obtain the (k, n)-secret shared share $[[a']]^Q$. The conversion from (k, k)-additive secret sharing to (k, n)-secret sharing can be performed by known techniques. For example, Reference 1 is used.

2-9: $[[a]]^Q=[[a']]^Q-p[[q]]^Q$ is calculated and output. For example, in the case of p = 61, since only the value is taken up to 31 in order to leave free bits, in this case, mod p → mod Q conversion, it is assumed that the conditions for using the quotient transition are often not satisfied. Therefore, it is preferable to use the non-quotient transition modulus conversion protocol.

3: $[[c]]^P:=[[\Sigma_{0 \leq i < m} 2^{\rho\_a} a_i 2^{\rho\_b} b_i]]^P$ is calculated.

4: $[[-\rho_a-\rho_b]]^Q$ is calculated and $<<-\rho_a-\rho_b>>^Q$ is obtained by conversion.

5: By the above-mentioned <Shift Amount Secure Left and right Shift Protocol>, a value obtained by shifting $[[c]]^P$ by $<<-\rho_a-\rho_b>>^Q$ and shifting $[[c]]^P$ by $(-\rho_a-\rho_b)$ bits is output.

A vector MSB normalization system for realizing the above-mentioned <Fixed-Point Vector Product-Sum Protocol> will be described below.

<Vector MSB Normalization System according to the Second Embodiment>

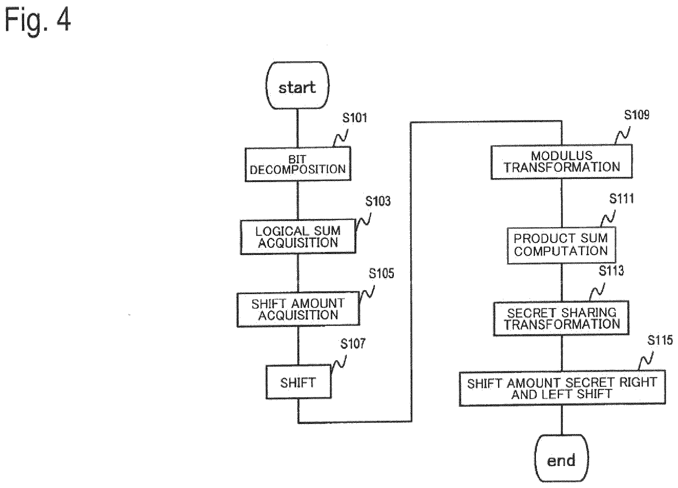

Fig. 1 shows an example of the configuration of the vector MSB normalization system 1 according to the second embodiment, and Fig. 4 shows an example of the processing flow of the vector MSB normalization system 1.

The vector MSB normalization system 1 takes two fixed-point vectors $[[\vec{a}]]^P$ and, $[[\vec{b}]]^P$ as inputs, obtains the sum of products $[[c]]^P$ of the elements, and outputs the sum of products. Here, $\Sigma_{0\leqq i<m}a_ib_i \fallingdotseq c$ is established. The vector length m of the vectors $[[\vec{a}]]^P$ and $[[\vec{b}]]^P$ is used as a parameter.

<Distributed Processing Apparatus 100-r>

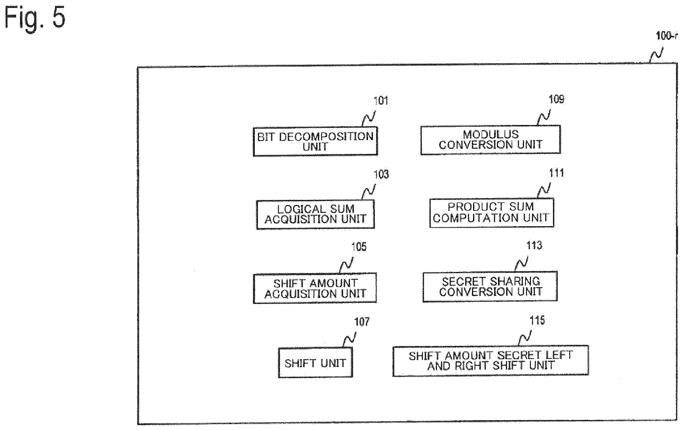

Fig. 5 illustrates an example of a functional block diagram of the distributed processing apparatus 100-r.

The distributed processing apparatus 100-r includes a modulus conversion unit 109, a product sum computation unit 111, a secret sharing conversion unit 113, and a shift amount secure left and right shift unit 115 in addition to the bit decomposition unit 101, the logical sum acquisition unit 103, the shift amount acquisition unit 105, and the shift unit 107,

Hereinafter, the processing of each part will be described with reference to Fig. 4.

S101 to S107 are as described in the first embodiment. The vector MSB normalization system 1 takes fixed-point vectors $[[\vec{a}]]^P$ and $[[\vec{b}]]^P$ as an input, performs vector MSB normalization, and obtains the vectors after vector MSB normalization and shift amounts $([[\vec{2^{\rho\_a}\vec{a}}]]^P, <<\rho_a>>^p)$ and $([[2^{\rho\_b}\vec{b}]]^P, <<\rho_b>>^p)$. The processing after S109 will be described.

<Modulus Conversion Unit 109>

The n modulus conversion units 109 receive $([[\vec{2^{\rho\_a}\vec{a}}]]^P, <<\rho_a>>^p)$ and $([[2^{\rho\_b}\vec{b}]]^P, <<\rho_b>>^p)$ and obtain $[[\rho_a]]^Q, [[\rho_b]]^Q$ by mod p $\rightarrow$ mod Q conversion from $<<\rho_a>>^p, <<\rho_b>>^p$ (S109).

<Product Sum Computation Unit 111>

The n product sum computation units 111 receive shares $[[\vec{2^{\rho\_a}\vec{a}}]]^P$ and $[[2^{\rho\_b}\vec{b}]]^P$ and calculate sum of products $[[c]]^P:=[[\Sigma_{0\leqq i<m}2^{\rho\_a}a_i2^{\rho\_b}b_i]]^P$ (S111).

<Secret Sharing Conversion Unit 113>

The n secret sharing conversion units 113 receive $[[\rho_a]]^Q$ and $[[\rho_b]]^Q$, calculate $[[-\rho_a-\rho_b]]^Q$, and obtain $<<-\rho_a-\rho_b>>^Q$ by secret sharing transformation (S113).

<Shift Amount Secure Left And Right Shift Unit 115>

The shift amount secure left and right shift unit 115 receives the share $[[c]]^P$ of the sum of products and the share $<<-\rho_a-\rho_b>>^Q$ of the shift amount and by the above-mentioned <Shift Amount Secure Left And Right Shift Protocol>, $[[c]]^P$ is shifted by $<<-\rho_a-\rho_b>>^Q$ bit (S115), and the shifted value is output. It should be noted that, instead of using the above-mentioned <Shift Amount Secure Left And Right Shift Protocol>, a value obtained by shifting $[[c]]^P$ by $<<-\rho_a-\rho_b>>^Q$ bit may be obtained by a known technique using the share of the sum of products $[[c]]^P$ and the share $<<-\rho_a-\rho_b>>^Q$ of the shift amount.

<Third Embodiment>

A description will be given mainly of differences from the first embodiment.

In the third embodiment, the floating point vector product sum utilizing the vector MSB normalization of the first embodiment will be described. First, several protocols used in the floating point vector product sum according to the third embodiment will be described.

<Floating Point Vector Exponent Part Unifying Protocol>

Input: Floating point vector $([[\vec{a}]]^P, [[\vec{\rho}_a]]^Q)$. However, in this embodiment, the mantissa part is a, the exponent part is $\rho_a$, and the real number x is $x=2^{\rho_-a}a$. $[[\vec{a}]]^P=([[a_0]]^P,..., [[a_{m-1}]]^P)$, and $[[\vec{\rho}_a]]^Q=([[\rho_{a\_0}]]^Q,...,[[\rho_{a\_m-1}]]^Q)$ are established and the floating point vector $([[\vec{a}]]^P, [[\vec{\rho}_a]]^Q)$ expresses the i$(0\leqq i<m-1)$-th real number as $2^{\rho_-(a_i)}a_i$.

Output: $([[\vec{b}]]^P, [[\rho_{max}]]^Q)$. However, for each i-th element $2^{\rho_-(a_i)}a_i\fallingdotseq2^{\rho_-max}b_i$

Processing: The exponent part $[[\vec{\rho}_a]]^Q$ of the floating point vector $([[\vec{a}]]^P, [[\vec{\rho}_a]]^Q)$ is unified to the largest value $[[\rho_{max}]]^Q$, and the mantissa part $[[\vec{a}]]]^P$ is shift right by the difference $[[\vec{\rho}_{dif}]]^Q:=[[\vec{\rho}_a]]^Q-[[\rho_{max}]]^Q$ to find a floating point vector with a unified exponent part.

1: The largest value among all elements included in $[[\vec{\rho}_a]]^Q$ is obtained as $[[\rho_{max}]]^Q$ by maximum value computation.
2: $[[\vec{\rho}_{dif}]]^Q:=[[\vec{\rho}_a]]^Q-[[\rho_{max}]]^Q$ is calculated. $[[\rho_{max}]]^Q$ is subtracted from each element of $[[\vec{\rho}_a]]^Q$.
3: By <Shift Amount Secure Left And Right Shift Protocol>, each element of $[[\vec{a}]]^P$ is shifted by each element of $[[\vec{\rho}_{dif}]]^Q$ to make $[[\vec{b}]]^P$. However, since the each element of $\vec{\rho}_{dif}$ is non-negative, the right shift is achieved, and therefore the branch of the left shift may be omitted.
4: Output $([[\vec{b}]]^P, [[\rho_{max}]]^Q)$

The floating point vector product sum realized in this embodiment will be described below.

<Floating Point Vector Product Sum Protocol>

Input: Floating point vectors $([[\vec{a}]]^P, [[\vec{\rho}]]^Q)$ and $([[\vec{b}]]^P, [[\vec{\rho}_b]]^Q)$
Parameter: Vector length m.
Output: $([[c]]^P, <<\rho_b>>^Q)$, where, the representation $\Sigma_{0\leq i<m}2^{(\rho_-a)\_i(\rho_-b)\_i}a_ib_i\fallingdotseq2^{\rho_-b}b$ is established.

1: By above-mentioned <Vector MSB Normalization Protocol>, vectors and shift amounts $([[\vec{a'}]], <<\rho'_a>>^P)$ and $([[\vec{b'}]], <<\rho'_b>>^P)$ which are obtained by adjusting the MSB position of $[[\vec{a}]]^P$ and$[[\vec{b}]]^P$ are obtained.
2: $[[\rho_{a'}]]^Q$ and $[[\rho_{b'}]]^Q$ are obtained by mod p $\rightarrow$ mod Q conversion.
3: By the above-mentioned <Floating Point Vector Exponent Part Unifying Protocol>, a vector in which exponent parts of $([[\vec{a'}]]^P, [[\vec{\rho}_a-\rho_{a'}]]^Q)$ and $([[\vec{b'}]]^P, [[\vec{\rho}_b-\rho_{b'}]]^Q)$ are unified and exponent parts $([[\vec{a''}]], [[\rho_{a''}]]^Q)$, $([[\vec{b''}]], [[\rho_{b''}]]^Q$ are obtained.
4: $[[c]]^P:=[[\Sigma_{0\leq i<m}a''_ib''_i]]^P$ is calculated to obtain $([[c]]^P, [[\rho_{a''}+\rho_{b''}]]^Q)$.

Further, when the number of input bits is known to some extent, or when it is known that the number of bits of a and b is relatively high for the reason that the MSB is adjusted, the right shift is performed by a predetermined number of bits $\sigma$ by a known shift amount disclosure right shift.

On the other hand, if the number of bits is unknown, the MSB is aligned to the fixed position by the same method as in the first embodiment, and then the MSB is shifted to the appropriate bit position by a known shift amount disclosure right shift. The right shift amount is defined as $[[\sigma]]^Q$.

Hereinafter, the vector MSB normalization system that realizes the above-mentioned <Floating Point Vector Product Sum Protocol> will be described.

<Vector MSB Normalization System according to Third Embodiment>

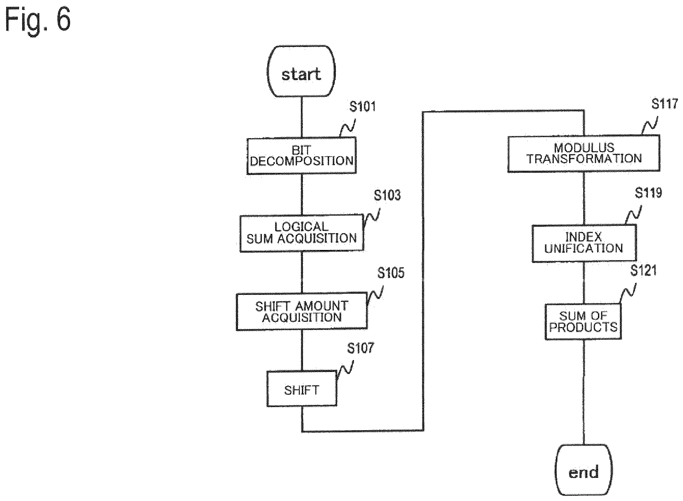

Fig. 1 illustrates a configuration example of the vector MSB normalization system 1 according to the second embodiment, and Fig. 6 illustrates an example of a processing flow of the vector MSB normalization system 1.

The vector MSB normalization system 1 inputs two floating point vectors $[\vec{a}]]^P, [[\vec{\rho}_a]]^Q)$ and $([[\vec{b}]]^P, [[\vec{\rho}_b]]^Q)$, obtains the product sum $([c]]^P, <<\rho c>>^Q)$ of the elements, and outputs the product sum. Where the representation is established: $\Sigma_{0\leq i<m}2^{(\rho_-a)\_i(\rho_-b)\_i}a_ib_i\fallingdotseq2^{\rho_-c}c$. The vector length m of the vectors $[[\vec{a}]]^P$ and $[[\vec{b}]]^P$ is used as a parameter.

[Distributed Processing Apparatus 100-r]

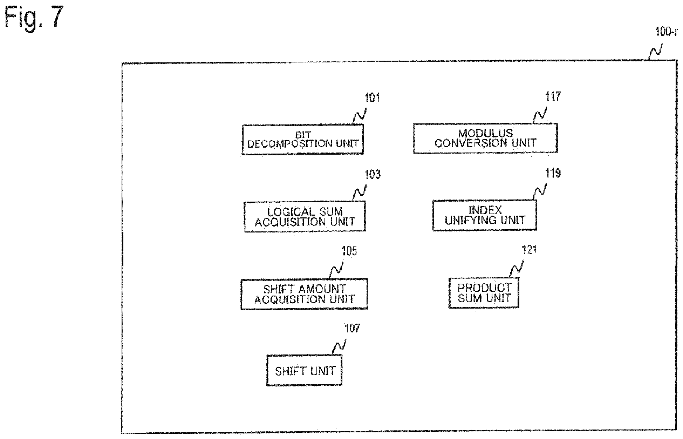

Fig. 7 illustrates an example of a functional block diagram of the distributed processing apparatus 100-r.

The distributed processing apparatus 100-r includes a modulus conversion unit 117, an index unifying unit 119, and a product sum unit 121 in addition to the bit decomposition unit 101, the logical sum acquisition unit 103, the shift amount acquisition unit 105, and the shift unit 107.

Hereinafter, the processing of each part will be described with reference to Fig. 6.

S101 to S107 are as described in the first embodiment. The vector MSB normalization system 1 inputs two floating point vectors ($[[\rightarrow a]]^P$, $[[\rightarrow \rho_a]]^Q$) and ($[[\rightarrow b]]^P$, $[[\rightarrow \rho_b]]^Q$) normalizes $[[\rightarrow a]]^P$ and $[[\rightarrow b]]^P$ to vector MSB, and obtains the vectors and the shift amounts ($[[\rightarrow a']]^P$, $<<\rho'_a>>^p$) and ($[[\rightarrow b']]^P$, $<<\rho'_b>>^p$) after the vector MSB normalization. The processing after S117 will be described.

<Modulus Conversion Unit 117>

The n modulus conversion units 117 receive $<<\rho'_a>>^p$ and $<<\rho'_b>>^p$ and obtain $<<\rho'_b>>^p$ by mod p → mod Q conversion (S117.)

<Index Unifying Unit 119>

The n index unifying units 119 receive exponential parts $[[\rightarrow \rho_a]]^Q$ and $[[\rightarrow \rho_b]]^Q$ of two floating point vectors ($[[\rightarrow a]]^P$, $[[\rightarrow \rho_a]]^Q$) and ($[[\rightarrow b]]^P$, $[[\rightarrow \rho_b]]^Q$), the vectors $[[\rightarrow a']]^P$ and $[[\rightarrow b']]^P$ after the vector MSB normalization, and the shift amounts $[[\rho_a']]^Q$ and $[[\rho_b']]^Q$ after mod p → mod Q conversion, and obtain vectors and exponent parts obtained by unifying exponent parts of ($[[\rightarrow a']]^P$, $[[\rightarrow \rho_a-\rho_a']]^Q$) and ($[[\rightarrow b']]^P$, $[[\rightarrow \rho_b-\rho_b']]^Q$) using the above-mentioned <Floating Point Vector Exponent Part Unifying Protocol> (S119).

<Product Sum Unit 121>

The n product sum units 121 calculate $[[c]]^P := [[\Sigma_{0 \leq i < m} a''_i b''_i]]^P$ and obtain ($[[c]]^P$, $[[\rho_{a'}+\rho_{b'}]]^Q$) (S121).

(Processing Efficiency)

Regarding the processing efficiency of the algorithm, a multiplication rotation, such as elemental operations, a flag column → numerical conversion, a shift amount secure Left and right shift protocol and a floating point addition and multiplication for comparison are evaluated.

(1) Multiplicative rotation: Communication amount (4/3) |P| bits, 2 rounds
(2) Flag column → numerical conversion: Communication amount (4/3) |L| bits, 2 rounds
(4) Shift amount secure Left and right shift protocol - Other - 2-: Communication amount ((5/3)d+(10/3)) IPI+(2d+1) |p|, round number $\lambda$+ 4
(5) Floating-point addition: Communication amount ((5/3)d+(19/3)) |P|+3|Q|+2$\lambda$+(4d+1)|p|, round number 2$\lambda$+7
(6) Floating-point multiplication: Communication amount (8/3) |P|, 3 rounds
d is the number of divisions d in the shift amount secure Left and right shift protocol.

For comparison, Reference 2 has two methods for addition, and if the cost of communication volume less than the logarithm is rounded, 22|P|+5|Q|+O(log|P|+log|Q|) can be expressed.

(Reference 2) Takashi NISHIDE, Takuma AMADA, "Multi-party calculation for floating point arithmetic with reduced traffic," IPSJ Journal, Vol.60, No.9, pp. 1433-1447 (2019). Better number of rounds is the constant 42. Regarding multiplication, the amount of communication is 12 |P|+O(1), and the number of rounds is the constant 23. Assuming that d is typically 1, the addition is 6|P|+3|Q|+2$\lambda$+5|p|. Considering that |P|=61, |Q|=13, $\lambda$=10, |p|=6 the present system is efficient by about three times. Since the addition is complicated, even if the shift which is an element is accelerated, the addition is not made extremely large. The multiplication is performed at a high speed of about five times.

<Actual Machine Performance Evaluation>

The results of the actual machine experiment are reported. The multi-party computation of the following three machines is performed.

◎ CPU: Xeon Gold 6144 3.5 GHz, 6cores x 2 sockets
◎ Memory: 768GB
◎ NW: 10 Gbps ring topology
◎ OS: Cent OS 7.3

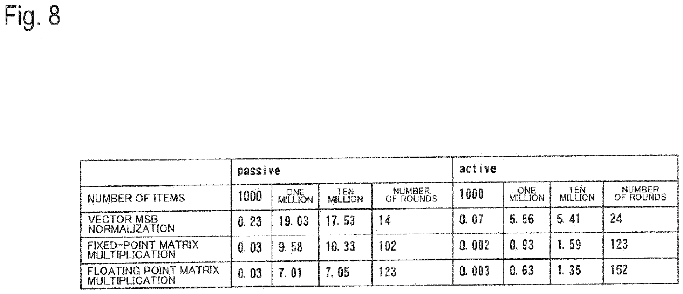

Fig. 8 illustrates the performance of each operation.

The upper limit of the MSB position is important as a parameter, and it is set to 28 bits (the number of 29 bits for the purpose of 0 start notation). The condition is that the maximum MSB position where the quotient transition can be used with mod P with a sign is 57 and is within half of the maximum MSB position. 28 bits exceed single accuracy and are considered sufficient for many applications.

In fact, matrix multiplication is selected as the product sum operation. This is because the matrix multiplication is composed of a product sum and is extremely important for machine learning or the like. Specifically, the left matrix is set to 100 rows, the number of rows x the number of columns = the "number of cases," and the right matrix is a vector whose length is the number of columns on the left. The processing amount is equal to a processing amount in which a product sum having a size as the number of columns is repeated by the number of rows.

There are three scales, 1000, 1 million, and 10 million, and the actual number of rounds is measured by maximizing the delay to 100 ms. In addition to the passive model, the performance of the active model is also shown (the protocol is an extension of the passive version). The security parameter of the active model is 8 bits, and the attack detection rate is about 99%. This probability is sufficient to deter an attack, as offline attacks are not possible, unlike computational security.

<Other Modified Examples>

The present invention is not limited to the foregoing embodiments and modified examples. For example, the above-described various kinds of processing may be performed chronologically, as described above, and may also be performed in parallel or individually in accordance with a processing capability of a device performing the processing or as necessary.

<Program and Recording Medium>

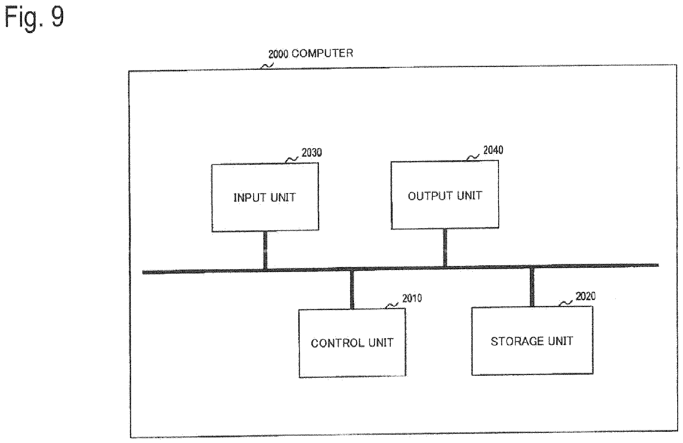

The aforementioned various types of processing can be carried out by causing a storage unit 2020 of the computer shown in Fig. 9 to load a program for executing steps of the above method, and causing a control unit 2010, an input unit 2030, an output unit 2040, or the like to operate.

The program describing the processing contents can be recorded on a computer-readable recording medium. As the computer-readable recording medium, for example, any of a magnetic recording device, an optical disc, a magneto-optical recording medium, and a semiconductor memory may be used.

In addition, the distribution of this program is carried out by, for example, selling, transferring, or lending a portable recording medium such as a DVD or a CD-ROM on which the program is recorded. Further, the program may be distributed by storing the program in a storage device of a server computer and transmitting the program from the server computer to other computers via a network.

A computer that executes such a program first temporarily stores, for example, a program recorded on a portable recording medium or a program transferred from a server computer in its own storage device. Then, when the processing is executed, the computer reads the program stored in its own recording medium and executes the processing according to the read program. Further, as another execution form of this program, a computer may read the program directly from a portable recording medium and execute processing according to the program. Further, each time the program is transferred from the server computer to this computer, the processing according to the received program may be executed sequentially. Also, the program may not be transferred from the server computer to this computer. The above-mentioned processing may be executed by a so-called application service provider (ASP) type service that realizes the processing function only by the execution instruction and the result acquisition. The program in the present embodiment includes information to be used for processing by a computer and equivalent to the program (data that is not a direct command to the computer but has a property that regulates the processing of the computer, or the like).

In this aspect, the device is configured by executing a predetermined program on a computer, but at least a part of the processing content may be implemented by hardware.

**Claims**

1. A secure MSB normalization system (1) comprising:

   n distributed processing apparatuses (100-r) where n is any integer greater than or equal to 3, wherein
   each of the n distributed processing apparatuses (100-r) includes a bit decomposition unit (101), a logical sum acquisition unit (103), a shift amount acquisition unit (105), and a shift unit (107),
   the n bit decomposition units (101) decompose a vector $[[\overrightarrow{a}]]^P$ of a (k, n)-secret shared share into bits and obtain a bit representation $[[\overrightarrow{a}]]^{2^L}$ of the vector $[[\overrightarrow{a}]]^P$ where $[[x]]^y$ denotes a share obtained by distributing a mod y element x by (k, n)-secret sharing, P is a prime number, and L is a maximum bit length of a data to be stored,

the n logical sum acquisition units (103) obtain a logical sum $[[A_i]]^2$ of all elements for a vector $[[\rightarrow a_i]]$ at each bit position of the bit representation $[[\rightarrow a]]^{2^L}$, wherein $0 \leq i \leq L-1$;

the n shift amount acquisition units (105) receive the logical sum $[[A_i]]^2$ and obtain a share $<<\rho>>^p$ obtained by distributing a shift amount p for shifting the most significant bit of a vector $[[\rightarrow A]]^2 = ([[A_0]]^2, ..., [[A_{L-1}]]^{2)}$ to a fixed position by (k,n)-replicated secret sharing by a modulus p where $<<x>>^y$ denotes a share obtained by distributing a mod y element x by (k, n)-replicated secret sharing, and

the n shift units (107) obtain a vector $[[2^p \rightarrow a]]^p$ in which each element of the vector $[[\rightarrow a]]^p$ is shifted left by p bits using the vector $[[\rightarrow a]]^p$ and the share $<<\rho>>^p$, wherein p is the number of bits of P.

2. The secure MSB normalization system according to claim 1, wherein

a vector $[[2^{\rho\_a} \rightarrow a]]^P$ after shifting the most significant bit to a fixed position from a fixed point vector $[[\rightarrow a]]^P$, a shift amount $<<\rho_a>>^p$, a vector $[[2^{\rho\_b} \rightarrow b]]^P$ after shifting the most significant bit to a fixed position from a fixed point vector $[[\rightarrow b]]^P$, and a shift amount $<<\rho_b>>^p$ are obtained,

each of the n distributed processing apparatuses (100-r) includes a modulus conversion unit (109), a product sum computation unit (111), a secret sharing conversion unit (113), a shift amount secure left and right shift unit (115), the n modulus conversion units (109) obtain $[[\rho_a]]^Q$, $[[\rho_b]]^Q$ by mod p → mod Q conversion from $<<\rho_a>>^p$, $<<\rho_b>>^p$,

the n product sum computation units (111) calculate $[[c]]^P := [[\sum_{0 \leq i < m} 2^{\rho\_a} a_i 2^{\rho\_b} b_i]]^P$, where m represents the vector length,

the n secret sharing conversion units (113) calculate $[[-\rho_a - \rho_b]]^Q$ from $[[\rho_a]]^Q$ and $[[\rho_b]]^Q$, and obtain a (k, n)-replicated secret shared share $<<-\rho_a-\rho_b>>^Q$ by secret sharing transformation, and

the n shift amount secure left and right shift units (115) receive a share $[[c]]^P$ of a product sum and a share $<<-\rho_a-\rho_b>>^Q$ of a shift amount, and shift $[[c]]^P$ by $<<-\rho_a-\rho_b>>^Q$ bit.

3. The secure MSB normalization system according to claim 1, wherein

a vector $[[\rightarrow a']]^P$ after shifting the most significant bit from a floating point vector $([[\rightarrow a]]^P, [[\rightarrow \rho_a]]^Q)$, a shift amount $<<\rho'_a>>^P$, a vector $[[\rightarrow b']]^P$ after shifting the most significant bit from a floating point vector $([[\rightarrow b]]^P, [[\rightarrow \rho_b]]^Q)$, and a shift amount $<<\rho'_b>>^p$ are obtained,

each of the n distributed processing apparatuses (100-r) includes a modulus conversion unit (117), an index unifying unit (119), and a product sum unit (121),

the n modulus conversion units (117) convert the $<\rho'_a>^p$ and the $<\rho'_b>^p$ into mod p → mod Q to obtain $[[\rho_a']]^Q$ and $[[\rho_b']]^Q$,

the n index unifying units (119) obtain vectors and exponent parts $([[\rightarrow a'']]^P, [[\rho_a']]^Q)$ and $([[\rightarrow b'']]^P, [[\rho_b']]^Q)$ obtained by unifying exponent parts of $([[\rightarrow a']]^P, [[\rho_a - \rho_a']]^Q)$ and $([[\rightarrow b']]^P, [[\rho_b - \rho_b']]^Q)$ using exponential parts $[[\rightarrow \rho_a]]^Q$ and $[[\rightarrow \rho_b]]^Q$ of the floating point vectors $([[\rightarrow a]]^P, [[\rightarrow \rho_a]]^Q)$ and $([[\rightarrow b]]^P, [[\rightarrow \rho_b]]^Q)$, the vectors $[[\rightarrow a']]^P$ and $[[\rightarrow b']]^P$ after shifting the most significant bit, and the shift amounts $[[\rho_a']]^Q$ and $[[\rho_b']]^Q$ after mod p → mod Q conversion, and the n product sum units (121) calculate $[[c]]^P := [[\sum_{0 \leq i < m} a''_i b''_i]]^P$, and obtain $[[c]]^P$, $[[\rho_a' + \rho_b']]^Q$, where m represents the vector length.

4. A distributed processing apparatus (100-r) included in a secure MSB normalization system (1), the apparatus (100-r) comprising:

a bit decomposition unit (101) configured to obtain a bit representation $[[\rightarrow a]]^{2^L}$ of a vector $[[\rightarrow a]]^P$ by bit-decomposing the vector $[[\rightarrow a]]^P$ of a (k, n)-secret shared share together with (n-1) distributed processing apparatuses (100-r) where n is any integer greater than or equal to 3, $[[x]]^y$ denotes a share obtained by distributing a mod y element x by (k, n)-secret sharing, P is a prime number, and L is a maximum bit length of a data to be stored;

a logical sum acquisition unit (103) configured to obtain a logical sum $[[A_i]]^2$ of all elements for a vector $[[\rightarrow a_i]]$ at each bit position of the bit representation $[[\rightarrow a]]^{2^L}$ together with the (n-1) distributed processing apparatuses (100-r), wherein $0 \leq i \leq L-1$;

a shift amount acquisition unit (105) configured to receive the logical sum $[[A_i]]^2$ and to obtain a share $<<\rho>>^p$ obtained by distributing a shift amount p for shifting the most significant bit of a vector $[[\rightarrow A]]^2 = [[A_0]]^2, ..., [[A_{L-1}]]^2$ to a fixed position by (k,n)-replicated secret sharing by a modulus p together with the (n-1) distributed processing apparatuses (100-r), where $<<x>>^y$ denotes a share obtained by distributing a mod y element x by (k, n)-replicated secret sharing; and a shift unit (107) configured to obtain a vector $[[2^p \rightarrow a]]^p$ in which each element of the vector $[[\rightarrow a]]^P$ is shifted left by p bits, using the vector $[[\rightarrow a]]^p$ and the share $<<\rho>>^p$ together with the (n-1) distributed processing apparatuses, wherein p is the number of bits of P.

5. A secure MSB normalization method using a secure MSB normalization system including n distributed processing apparatuses where n is any integer greater than or equal to 3, wherein
each of the n distributed processing apparatuses includes a bit decomposition unit, a logical sum acquisition unit, a shift amount acquisition unit, and a shift unit, the method comprising:

causing the n bit decomposition units to perform a bit decomposition step (S101) of decomposing a vector $[[\rightarrow a]]^P$ of a (k, n)-secret shared share into bits and obtaining a bit representation $[[\rightarrow a]]^{2^L}$ of the vector $[[\rightarrow a]]^P$ where $[[x]]^y$ denotes a share obtained by distributing a mod y element x by (k, n)-secret sharing, P is a prime number, and L is a maximum bit length of a data to be stored;

causing the n logical sum acquisition units to perform a logical sum acquisition step (S103) of obtaining a logical sum $[[A_i]]^2$ of all elements for a vector $[[\rightarrow a_i]]$ at each bit position of the bit representation $[[\rightarrow a]]^{2^L}$, wherein $0 \leq i < L-1$;

causing the n shift amount acquisition units to perform a shift amount acquisition step (S105) of receiving the logical sum $[[A_i]]^2$ and obtaining a share $<<\rho>>^P$ obtained by distributing a shift amount p for shifting the most significant bit of a vector $[[\rightarrow A]]^2 = ([[A_0]]^2, ..., [[A_{L-1}]]^2)$ to a fixed position by (k, n)-replicated secret sharing by a modulus p where $<<x>>^y$ denotes a share obtained by distributing a mod y element x by (k, n)-replicated secret sharing, and

causing the n shift units to perform a shift step (S107) of obtaining a vector $[[2^\rho \rightarrow a]]^P$ in which each element of the vector $[[\rightarrow a]]^P$ is shifted left by p bits using the vector $[[\rightarrow a]]^p$ and the share $<<\rho>>^P$, wherein p is the number of bits of P.

6. The secure MSB normalization method according to claim 5, wherein

a vector $[[2^{\rho\_a} \rightarrow a]]^P$ after shifting the most significant bit to a fixed position from a fixed point vector $[[\rightarrow a]]^P$, a shift amount $<<\rho_a>>^P$, a vector $[[2^{\rho\_b} \rightarrow b]]^P$ after shifting the most significant bit to a fixed position from a fixed point vector $[[\rightarrow b]]^P$, and a shift amount $<<\rho_b>>^P$ are obtained, and

each of the n distributed processing apparatuses includes a modulus conversion unit, a product sum computation unit, a secret sharing conversion unit, a shift amount secure left and right shift unit, the method further comprising:

causing the n modulus conversion units to perform a modulus conversion step (S109) of obtaining $[[\rho_a]]^Q$, $[[\rho_b]]^Q$ by mod p $\rightarrow$ mod Q conversion from $<<\rho_a>>^P$, $<<\rho_b>>^P$,

causing the n product sum computation units to perform a product sum computation step (S111) of calculating $[[c]]^P := [[\Sigma_{0 \leq i < m} 2^{\rho\_a} a_i 2^{\rho\_b} b_i]]^P$, where m represents the vector length,

causing the n secret sharing conversion units to perform a secret sharing conversion step (S113) of calculating $[[-\rho_a-\rho_b]]^Q$ from $[[\rho_a]]^Q$ and $[[\rho_b]]^Q$, and obtaining a (k, n) - replicated secret shared share $<<-\rho_a-\rho_b>>^Q$ by secret sharing transformation, and

causing the n shift amount secure left and right shift units to perform a shift amount secure left and right shift step (S115) of receiving a share $[[c]]^P$ of a product sum and a share $<<-\rho_a-\rho_b>>^Q$ of a shift amount, and shifting $[[c]]^P$ by $<<-\rho_a-\rho_b>>^Q$ bits.

7. The secure MSB normalization method according to claim 5, wherein

a vector $[[\rightarrow a']]^P$ after shifting the most significant bit from a floating point vector $([[\rightarrow a]]^P, [[\rightarrow \rho_a]]^Q)$, a shift amount $<<\rho'_a>>^P$, a vector $[[\rightarrow b']]^P$ after shifting the most significant bit from a floating point vector $([[\rightarrow b]]^P, [[\rightarrow \rho_b]]^Q)$, and a shift amount $<<\rho'_b>>^P$ are obtained, and

each of the n distributed processing apparatuses includes a modulus conversion unit, an index unifying unit, and a product sum unit, the method further comprising:

causing the n modulus conversion units to perform a modulus conversion step (S117) of converting the $<<\rho'_a>>^P$ and the $<<\rho'_b>>^P$ into mod p $\rightarrow$ mod Q to obtain $[[\rho_{a'}]]^Q$ and $[[\rho_{b'}]]^Q$,

causing the n index unifying units to perform an index unification step (S119) of obtaining vectors and exponent parts $([[\rightarrow a'']]^P, [[\rho_{a'}]]^Q)$ and $([[\rightarrow b'']]^P, [[\rho_{b'}]]^Q)$ obtained by unifying exponent parts of $([[\rightarrow a']]^P, [[\rightarrow \rho_a-\rho_{a'}]]^Q)$ and $([[\rightarrow b']]^P, [[\rightarrow \rho_b-\rho_{b'}]]^Q)$ using exponential parts $[[\rightarrow \rho_a]]^Q$ and $[[\rightarrow \rho_b]]^Q$ of the floating point vectors $([[\rightarrow a]]^P, [[\rightarrow \rho_a]]^Q)$ and $([[\rightarrow b]]^P, [[\rightarrow \rho_b]]^Q)$, the vectors $[[\rightarrow a']]^P$ and $[[\rightarrow b']]^P$ after shifting the most significant bit, and the shift amounts $[[\rho_{a'}]]^Q$ and $[[\rho_{b'}]]^Q$ after mod p $\rightarrow$ mod Q conversion, and causing the n product sum units to perform a product sum step (S121) of calculating $[[c]]^P := [[\Sigma_{0 \leq i < m} a''_i b''_i]]^P$, where m represents the vector length, and obtaining $[[c]]^P$, $[[\rho_{a'}+\rho_{b'}]]^Q$.

8. A program causing a computer to function as the distributed processing apparatus of claim 4.

**Patentansprüche**

1. Sicheres MSB-Normalisierungssystem (1) mit:

n verteilten Verarbeitungsvorrichtungen (100-r), wobei n eine beliebige ganze Zahl größer oder gleich 3 ist, wobei jede der n verteilten Verarbeitungsvorrichtungen (100-r) eine Bitzerlegungseinheit (101), eine Logiksummenerfassungseinheit (103), eine Verschiebungsbetragserfassungseinheit (105) und eine Verschiebungseinheit (107) enthält,

die n Bitzerlegungseinheiten (101) einen Vektor $[[\rightarrow a]]^P$ eines (k, n)-geheimnisgeteilten Anteils in Bits zerlegen und eine Bitdarstellung $[[\rightarrow a]]^{2^{\wedge}L}$ des Vektors $[[\rightarrow a]]^P$ erhalten, wobei $[[x]]^y$ einen Anteil bezeichnet, der durch Verteilen eines mod-y-Elements x durch (k, n)-Geheimnisteilung erhalten wird, P eine Primzahl ist und L eine maximale Bitlänge von zu speichernden Daten ist,

die n Logiksummenerfassungseinheiten (103) eine Logiksumme $[[A_i]]^2$ aller Elemente für einen Vektor $[[\rightarrow a_i]]$ an jeder Bitposition der Bitdarstellung $[[\rightarrow a]]^{2^{\wedge}L}$ erhalten, wobei $0 \le i < L-1$;

die n Verschiebungsbetragserfassungseinheiten (105) die Logiksumme $[[A_i]]^2$ empfangen und einen Anteil $<<\rho>>^p$ erhalten, der durch Verteilen eines Verschiebungsbetrags $\rho$ zum Verschieben des höchstwertigen Bits eines Vektors $[[\rightarrow A]]^2 = ([A_0]^2, \cdots, [[A_{L-1}]]^2)$ zu einer festen Position durch (k, n)-replizierte Geheimnisteilung durch einen Modul p erhalten wird, wobei $<<x>>^y$ einen Anteil bezeichnet, der durch Verteilen eines mod-y-Elements x durch (k, n)-replizierte Geheimnisteilung erhalten wird, und

die n Verschiebungseinheiten (107) einen Vektor $[[2^\rho \cdot a]]^p$ erhalten, in dem jedes Element des Vektors $[[\rightarrow a]]^p$ um $\rho$ Bits unter Verwendung des Vektors $[[\rightarrow a]]^p$ und des Anteils $<<\rho>>^p$ nach links verschoben wird, wobei p die Anzahl von Bits von P ist.

2. Sicheres MSB-Normalisierungssystem nach Anspruch 1, wobei

ein Vektor $[[2^{\rho\_a} \cdot \rightarrow a]]^P$ nach dem Verschieben des höchstwertigen Bits zu einer festen Position von einem Festpunktvektor $[[\rightarrow a]]^P$, ein Verschiebungsbetrag $<<\rho_a>>^p$, ein Vektor $[[2^{\rho\_b} \cdot \rightarrow b]]^P$ nach dem Verschieben des höchstwertigen Bits zu einer festen Position von einem Festpunktvektor $[[\rightarrow b]]^P$ und ein Verschiebungsbetrag $<<\rho_b>>^p$ erhalten werden,

jede der n verteilten Verarbeitungsvorrichtungen (100-r) eine Modulumwandlungseinheit (109), eine Produktsummenberechnungseinheit (111), eine Geheimnisteilungsumwandlungseinheit (113), eine verschiebungsbetragssichere Links- und Rechtsverschiebungseinheit (115) enthält,

die n Modulumwandlungseinheiten (109) $[[\rho_a]]^Q$, $[[\rho_b]]^Q$ durch mod p $\rightarrow$ mod Q-Umwandlung von $<<\rho_a>>^p$, $<<\rho_b>>^p$ erhalten,

die n Produktsummenberechnungseinheiten (111) $[[c]]^P := [[\sum_{0 \le i < m} 2^{\rho\_a} a_i 2^{\rho\_b} b_i]]^P$ berechnen, wobei m die Vektorlänge darstellt,

die n Geheimnisteilungsumwandlungseinheiten (113) $[[-\rho_a - \rho_b]]^Q$ aus $[[\rho_a]]^Q$ und $[[\rho_b]]^Q$ berechnen und einen (k, n)-replizierten geheimnisgeteilten Anteil $<<-\rho_a - \rho_b>>^Q$ durch Geheimnisteilungstransformation erhalten, und

die n verschiebungsbetragssicheren Links- und Rechtsverschiebungseinheiten (115) einen Anteil $[[c]]^P$ einer Produktsumme und einen Anteil $<<-\rho_a - \rho_b>>^Q$ eines Verschiebungsbetrags empfangen und $[[c]]^P$ um $<<-\rho_a - \rho_b>>^Q$ Bit verschieben.

3. Sicheres MSB-Normalisierungssystem nach Anspruch 1, wobei

ein Vektor $[[\rightarrow a']]^P$ nach dem Verschieben des höchstwertigen Bits von einem Gleitkommavektor $([[\rightarrow a]]^P, [[\rightarrow \rho_a]]^Q)$, ein Verschiebungsbetrag $<<\rho'_a>>^P$, ein Vektor $[[\rightarrow b']]^P$ nach dem Verschieben des höchstwertigen Bits von einem Gleitkommavektor $([[\rightarrow b]]^P, [[\rightarrow \rho_b]]^Q)$ und ein Verschiebungsbetrag $<<\rho'_b>>^p$ erhalten werden,

jede der n verteilten Verarbeitungsvorrichtungen (100-r) eine Modulumwandlungseinheit (117), eine Indexvereinheitlichungseinheit (119) und eine Produktsummeneinheit (121) enthält,

die n Modulumwandlungseinheiten (117) das $<\rho'_a>^P$ und das $<\rho'_b>^p$ in mod p $\rightarrow$ mod Q umwandeln, um $[[\rho_a']]^Q$ und $[[\rho_b']]^Q$ zu erhalten,

die n Indexvereinheitlichungseinheiten (119) Vektoren und Exponententeile $([[\rightarrow a'']]^P, [[\rho_a]]^Q)$ und $([[\rightarrow b'']]^P, [[\rho_b]]^Q)$ erhalten, die durch Vereinheitlichen von Exponententeilen von $([[\rightarrow a']]^P, [[\rho_a - \rho_a']]^Q)$ und $([[\rightarrow b']]^P, [[\rho_b - \rho_b']]^Q)$ unter Verwendung von Exponentialteilen $[[\rho_a]]^Q$ und $[[\rightarrow \rho_b]]^Q$ der Gleitkommavektoren $([[\rightarrow a]]^P, [[\rightarrow \rho_a]]^Q)$ und $([[\rightarrow b]]^P, [[\rightarrow \rho_b]]^Q)$, der Vektoren $[[\rightarrow a']]^P$ und $[[\rightarrow b']]^P$ nach dem Verschieben des höchstwertigen Bits und der Verschiebungsbeträge $[[\rho_a']]^Q$ und $[[\rho_b']]^Q$ nach mod p $\rightarrow$ mod Q-Umwandlung erhalten werden, und die n Produktsummeneinheiten (121) $[[c]]^P := [[\sum_{0 \le i < m} a''_i b''_i]]^P$ berechnen und $[[c]]^P$, $[[\rho_a' + \rho_b']]^Q$ erhalten, wobei m die Vektorlänge darstellt.

**4.** Verteilte Verarbeitungsvorrichtung (100-r), die in einem sicheren MSB-Normalisierungssystem (1) enthalten ist, wobei die Vorrichtung (100-r) Folgendes aufweist:

eine Bitzerlegungseinheit (101), die dazu konfiguriert ist, eine Bitdarstellung $[[\vec{a}]]^{2^L}$ eines Vektors $[[\vec{a}]]^P$ durch Bitzerlegen des Vektors $[[\vec{a}]]^P$ eines (k, n)-geheimnisgeteilten Anteils zusammen mit (n-1) verteilten Verarbeitungsvorrichtungen (100-r) zu erhalten, wobei n eine beliebige ganze Zahl größer oder gleich 3 ist, $[[x]]^y$ einen Anteil bezeichnet, der durch Verteilen eines mod-y-Elements x durch (k, n)-Geheimnisteilung erhalten wird, P eine Primzahl ist und L eine maximale Bitlänge von zu speichernden Daten ist;

eine Logiksummenerfassungseinheit (103), die dazu konfiguriert ist, eine Logiksumme $[[A_i]]^2$ aller Elemente für einen Vektor $[[\vec{a_i}]]$ an jeder Bitposition der Bitdarstellung $[[\vec{a}]]^{2^L}$ zusammen mit den (n-1) verteilten Verarbeitungsvorrichtungen (100-r) zu erhalten, wobei $0 \leq i < L-1$;

eine Verschiebungsbetragserfassungseinheit (105), die dazu konfiguriert ist, die Logiksumme $[[A_i]]^2$ zu empfangen und einen Anteil $<<\rho>>^p$ zu erhalten, der durch Verteilen eines Verschiebungsbetrags p zum Verschieben des höchstwertigen Bits eines Vektors $[[\vec{A}]]^2 = [[A_0]]^2, \cdots, [[A_{L\_1}]]^2$ zu einer festen Position durch (k, n)-replizierte Geheimnisteilung durch einen Modul p zusammen mit den (n-1) verteilten Verarbeitungsvorrichtungen (100-r) erhalten wird, wobei $<<x>>^y$ einen Anteil bezeichnet, der durch Verteilen eines mod-y-Elements x durch (k, n)-replizierte Geheimnisteilung erhalten wird; und

eine Verschiebungseinheit (107), die dazu konfiguriert ist, einen Vektor $[[2^\rho \vec{a}]]^p$ zu erhalten, in dem jedes Element des Vektors $[[\vec{a}]]^p$ um $\rho$ Bits nach links verschoben wird, unter Verwendung des Vektors $[[\vec{a}]]^p$ und des Anteils $<<\rho>>^p$ zusammen mit den (n-1) verteilten Verarbeitungsvorrichtungen, wobei p die Anzahl von Bits von P ist.

**5.** Sicheres MSB-Normalisierungsverfahren unter Verwendung eines sicheren MSB-Normalisierungssystems, das n verteilte Verarbeitungsvorrichtungen enthält, wobei n eine beliebige ganze Zahl größer oder gleich 3 ist, wobei jede der n verteilten Verarbeitungsvorrichtungen eine Bitzerlegungseinheit, eine Logiksummenerfassungseinheit, eine Verschiebungsbetragserfassungseinheit und eine Verschiebungseinheit enthält, wobei das Verfahren Folgendes aufweist:

Bewirken, dass die n Bitzerlegungseinheiten einen Bitzerlegungsschritt (S101) zum Zerlegen eines Vektors $[[\vec{a}]]^P$ eines (k, n)-geheimnisgeteilten Anteils in Bits und Erhalten einer Bitdarstellung $[[\vec{a}]]^{2^L}$ des Vektors $[[\vec{a}]]^P$ durchführen, wobei $[[x]]^y$ einen Anteil bezeichnet, der durch Verteilen eines mod-y-Elements x durch (k, n)-Geheimnisteilung erhalten wird, P eine Primzahl ist und L eine maximale Bitlänge von zu speichernden Daten ist;

Bewirken, dass die n Logiksummenerfassungseinheiten einen Logiksummenerfassungsschritt (S103) zum Erhalten einer Logiksumme $[[A_i]]^2$ aller Elemente für einen Vektor $[[\vec{a_i}]]$ an jeder Bitposition der Bitdarstellung $[[\vec{a}]]^{2^L}$ durchführen, wobei $0 \leq i < L-1$;

Bewirken, dass die n Verschiebungsbetragserfassungseinheiten einen Verschiebungsbetragserfassungsschritt (S105) zum Empfangen der Logiksumme $[[A_i]]^2$ und Erhalten eines Anteils $<<\rho>>^p$ durchführen, der durch Verteilen eines Verschiebungsbetrags p zum Verschieben des höchstwertigen Bits eines Vektors $[[\vec{A}]]^2 = ([[A_0]]^2, \cdots, [[A_{L\_1}]]^2)$ zu einer festen Position durch (k, n)-replizierte Geheimnisteilung durch einen Modul p erhalten wird, wobei $<<x>>^y$ einen Anteil bezeichnet, der durch Verteilen eines mod-y-Elements x durch (k, n)-replizierte Geheimnisteilung erhalten wird, und Bewirken, dass die n Verschiebungseinheiten einen Verschiebungsschritt (S107) zum Erhalten eines Vektors $[[2^\rho \vec{a}]]^p$ durchführen, in dem jedes Element des Vektors $[[\vec{a}]]^p$ um $\rho$ Bits unter Verwendung des Vektors $[[\vec{a}]]^p$ und des Anteils $<<\rho>>^p$ nach links verschoben wird, wobei $\rho$ die Anzahl von Bits von P ist.

**6.** Sicheres MSB-Normalisierungsverfahren nach Anspruch 5, wobei

ein Vektor $[[2^{\rho\_a} \vec{a}]]^P$ nach dem Verschieben des höchstwertigen Bits zu einer festen Position von einem Festpunktvektor $[[\vec{a}]]^P$, ein Verschiebungsbetrag $<<\rho_a>>^p$, ein Vektor $[[2^{\rho\_b} \vec{b}]]^P$ nach dem Verschieben des höchstwertigen Bits zu einer festen Position von einem Festpunktvektor $[[\vec{b}]]^P$ und ein Verschiebungsbetrag $<<\rho_b>>^p$ erhalten werden, und

jede der n verteilten Verarbeitungsvorrichtungen eine Modulumwandlungseinheit, eine Produktsummenberechnungseinheit, eine Geheimnisteilungsumwandlungseinheit, eine verschiebungsbetragssichere Links- und Rechtsverschiebungseinheit enthält, wobei das Verfahren ferner Folgendes aufweist:

Bewirken, dass die n Modulumwandlungseinheiten einen Modulumwandlungsschritt (S109) zum Erhalten von $[[\rho_a]]^Q$, $[[\rho_b]]^Q$ durch mod p $\rightarrow$ mod Q-Umwandlung von $<<\rho_a>>^p$, $<<\rho_b>>^p$ durchführen,

Bewirken, dass die n Produktsummenberechnungseinheiten einen Produktsummenberechnungsschritt (S111) zum Berechnen von $[[c]]^P := [[\sum_{0 \le i < m} 2^{\rho\_a} a_i 2^{\rho\_b} b_i]]^P$ durchführen, wobei m die Vektorlänge darstellt, Bewirken, dass die n Geheimnisteilungsumwandlungseinheiten einen Geheimnisteilungsumwandlungsschritt (S113) zum Berechnen von $[[-\rho_a-\rho_b]]^Q$ aus $[[\rho_a]]^Q$ und $[[\rho_b]]^Q$ und Erhalten eines (k, n)-replizierten geheimnisgeteilten Anteils $<<-\rho_a-\rho_b>>^Q$ durch Geheimnisteilungstransformation durchführen, und Bewirken, dass die n verschiebungsbetragssicheren Links- und Rechtsverschiebungseinheiten einen verschiebungsbetragssicheren Links- und Rechtsverschiebungsschritt (S115) zum Empfangen eines Anteils $[[c]]^P$ einer Produktsumme und eines Anteils $<<-\rho_a-\rho_b>>^Q$ eines Verschiebungsbetrags und Verschieben von $[[c]]^P$ um $<<-\rho_a-\rho_b>>^Q$ Bits durchführen.

**7.** Sicheres MSB-Normalisierungsverfahren nach Anspruch 5, wobei

ein Vektor $[[\overrightarrow{a'}]]^P$ nach dem Verschieben des höchstwertigen Bits von einem Gleitkommavektor ($[[\overrightarrow{a}]]^P$, $[[\overrightarrow{\rho_a}]]^Q$), ein Verschiebungsbetrag $<<\rho'_a>>^P$, ein Vektor $[[\overrightarrow{b'}]]^P$ nach dem Verschieben des höchstwertigen Bits von einem Gleitkommavektor ($[[\overrightarrow{b}]]^P$, $[[\overrightarrow{\rho_b}]]^Q$) und ein Verschiebungsbetrag $<<\rho'_b>>^p$ erhalten werden, und jede der n verteilten Verarbeitungsvorrichtungen eine Modulumwandlungseinheit, eine Indexvereinheitlichungseinheit und eine Produktsummeneinheit enthält, wobei das Verfahren ferner Folgendes aufweist:

Bewirken, dass die n Modulumwandlungseinheiten einen Modulumwandlungsschritt (S117) zum Umwandeln des $<\rho'_a>^p$ und des $<\rho'_b>^p$ in mod p → mod Q durchführen, um $[[\rho_{a'}]]^Q$ und $[[\rho_{b'}]]^Q$ zu erhalten, Bewirken, dass die n Indexvereinheitlichungseinheiten einen Indexvereinheitlichungsschritt (S119) zum Erhalten von Vektoren und Exponententeilen ($[[\overrightarrow{a''}]]^P$, $[[\rho_{a'}]]^Q$) und ($[[\overrightarrow{b''}]]^P$, $[[\rho_{b'}]]^Q$) durchführen, die durch Vereinheitlichen von Exponententeilen von ($[[\overrightarrow{a'}]]^P$, $[[\overrightarrow{\rho_a}-\rho_{a'}]]^Q$) und ($[[\overrightarrow{b'}]]^P$, $[[\overrightarrow{\rho_b}-\rho_{b'}]]^Q$) unter Verwendung von Exponentialteilen $[[\overrightarrow{\rho_a}]]^Q$ und $[[\overrightarrow{\rho_b}]]^Q$ der Gleitkommavektoren ($[[\overrightarrow{a}]]^P$, $[[\overrightarrow{\rho_a}]]^Q$) und ($[[\overrightarrow{b}]]^P$, $[[\overrightarrow{\rho_b}]]^Q$), der Vektoren $[[\overrightarrow{a'}]]^P$ und $[[\overrightarrow{b'}]]^P$ nach dem Verschieben des höchstwertigen Bits und der Verschiebungsbeträge $[[\rho_{a'}]]^Q$ und $[[\rho_{b'}]]^Q$ nach mod p → mod Q-Umwandlung erhalten werden, und Bewirken, dass die n Produktsummeneinheiten einen Produktsummenschritt (S121) zum Berechnen von $[[c]]^P := [[\sum_{0 \le i < m} a''_i b''_i]]^P$ durchführen, wobei m die Vektorlänge darstellt, und Erhalten von $[[c]]^P$, $[[\rho_{a'}+\rho_{b'}]]^Q$.

**8.** Programm, das bewirkt, dass ein Computer als die verteilte Verarbeitungsvorrichtung nach Anspruch 4 fungiert.

**Revendications**

**1.** Système de normalisation MSB sécurisé (1) comprenant :

n appareils de traitement distribués (100-r), où n est un entier quelconque supérieur ou égal à 3, dans lequel chacun des n appareils de traitement distribués (100-r) comprend une unité de décomposition de bits (101), une unité d'acquisition de somme logique (103), une unité d'acquisition de quantité de décalage (105) et une unité de décalage (107), les n unités de décomposition de bits (101) décomposent un vecteur $[[\overrightarrow{a}]]^P$ d'un partage partagé de secret (k, n) en bits et obtiennent une représentation de bits $[[\overrightarrow{a}]]^{2 \wedge L}$ du vecteur $[[\overrightarrow{a}]]^P$ où $[[x]]^y$ désigne un partage obtenu en distribuant un élément mod y x par un partage de secret (k, n), P est un nombre premier et L est une longueur de bit maximale d'une donnée à stocker, les n unités d'acquisition de somme logique (103) obtiennent une somme logique $[[A_i]]^2$ de tous les éléments pour un vecteur $[[\overrightarrow{a_i}]]$ à chaque position de bit de la représentation de bits $[[\overrightarrow{a}]]^{2 \wedge L}$, où $0 \le i < L-1$ ; les n unités d'acquisition de quantité de décalage (105) reçoivent la somme logique $[[A_i]]^2$ et obtiennent un partage $<<\rho>>^p$ obtenu en distribuant une quantité de décalage $\rho$ pour décaler le bit le plus significatif d'un vecteur $[[\overrightarrow{A}]]^2 = ([[A_0]]^2, ..., [[A_{L-1}]]^2)$ à une position fixe par un partage de secret (k, n) répliqué par un module p où $<<x>>^y$ désigne un partage obtenu en distribuant un élément mod y x par un partage de secret (k, n) répliqué, et les n unités de décalage (107) obtiennent un vecteur $[[2^{\rho}\overrightarrow{a}]]^p$ dans lequel chaque élément du vecteur $[[\overrightarrow{a}]]^p$ est décalé à gauche de $\rho$ bits en utilisant le vecteur $[[\overrightarrow{a}]]^p$ et le partage $<<\rho>>^p$, où p est le nombre de bits de P.

**2.** Système de normalisation MSB sécurisé selon la revendication 1, dans lequel

un vecteur $[[2^{\rho\_a}\overrightarrow{a}]]^P$ après le décalage du bit le plus significatif à une position fixe à partir d'un vecteur de point fixe $[[\overrightarrow{a}]]^P$, une quantité de décalage $<<\rho_a>>^p$, un vecteur $[[2^{\rho\_b}\overrightarrow{b}]]^P$ après le décalage du bit le plus significatif à une position fixe à partir d'un vecteur de point fixe $[[^{\rightarrow}b]]^P$, et une quantité de décalage $<<\rho_b>>^p$ sont obtenus, chacun des n appareils de traitement distribués (100-r) comprend une unité de conversion de module (109), une unité de calcul de somme de produit (111), une unité de conversion de partage de secret (113), une unité de décalage gauche et droit sécurisé de quantité de décalage (115),

les n unités de conversion de module (109) obtiennent $[[\rho_a]]^Q$, $[[\rho_b]]^Q$ par une conversion mod p → mod Q à partir de $<<\rho_a>>^p$, $<<\rho_b>>^p$,

les n unités de calcul de somme de produit (111) calculent $[[c]]^P := [[\sum_{0 \leq i < m} 2^{\rho_-a} a_i 2^{\rho_-b} b_i]]^P$, où m représente la longueur de vecteur,

les n unités de conversion de partage de secret (113) calculent $[[-\rho_a-\rho_b]]^Q$ à partir de $[[\rho_a]]^Q$ et $[[\rho_b]]^Q$, et obtiennent un partage de secret (k, n) répliqué $<<-\rho_a-\rho_b>>^Q$ par une transformation de partage de secret, et

les n unités de décalage gauche et droit sécurisé de quantité de décalage (115) reçoivent un partage $[[c]]^P$ d'une somme de produit et un partage $<<-\rho_a-\rho_b>>^Q$ d'une quantité de décalage, et décalent $[[c]]^P$ par $<<-\rho_a-\rho_b>>^Q$ bit.

**3.** Système de normalisation MSB sécurisé selon la revendication 1, dans lequel

un vecteur $[[^{\rightarrow}a']]^P$ après le décalage du bit le plus significatif à partir d'un vecteur de point flottant $([[^{\rightarrow}a]]^P, [[^{\rightarrow}\rho_a]]^Q)$, une quantité de décalage $<<\rho'_a>>^P$, un vecteur $[[^{\rightarrow}b']]^P$ après le décalage du bit le plus significatif à partir d'un vecteur de point flottant $([[^{\rightarrow}b]]^P, [[^{\rightarrow}\rho_b]]^Q)$, et une quantité de décalage $<<\rho'_b>>^p$ sont obtenus,

chacun des n appareils de traitement distribués (100-r) comprend une unité de conversion de module (117), une unité d'unification d'indice (119) et une unité de somme de produit (121),

les n unités de conversion de module (117) convertissent le $<\rho'_a>^P$ et le $<\rho'_b>^p$ en mod p → mod Q pour obtenir $[[\rho_a']]^Q$ et $[[\rho_b']]^Q$,

les n unités d'unification d'indice (119) obtiennent des vecteurs et des parties d'exposant $([[^{\rightarrow}a'']]^P, [[\rho_a']]^Q)$ et $([[^{\rightarrow}b'']]^P, [[\rho_b']]^Q)$ obtenus en unifiant des parties d'exposant de $([[^{\rightarrow}a']]^P, [[^{\rightarrow}\rho_a]]^Q)$ et $([[^{\rightarrow}b']]^P, [[^{\rightarrow}\rho_b-\rho_b']]^Q)$ en utilisant des parties d'exponent $[[\rho a]]^Q$ et $[[^{\rightarrow}\rho_b]]^Q$ des vecteurs de point flottant $([[^{\rightarrow}a]]^P, [[^{\rightarrow}\rho_a]]^Q)$ et $([[^{\rightarrow}b]]^P, [[^{\rightarrow}\rho_b]]^Q)$, les vecteurs $[[^{\rightarrow}a']]^P$ et $[^{\rightarrow}b']]^P$ après le décalage du bit le plus significatif, et les quantités de décalage $[[\rho_a']]^Q$ et $[[\rho_b']]^Q$ après la conversion mod p → mod Q, et les n unités de somme de produit (121) calculent $[[c]]^P := [[\sum_{0 \leq i < m} a''_i b''_i]]^P$, et obtiennent $[[c]]^P$, $[[\rho_a' + \rho_b']]^Q$, où m représente la longueur de vecteur.

**4.** Appareil de traitement distribué (100-r) inclus dans un système de normalisation MSB sécurisé (1), l'appareil (100-r) comprenant :

une unité de décomposition de bits (101) configurée pour obtenir une représentation de bits $[[^{\rightarrow}a]]^{2^L}$ d'un vecteur $[[^{\rightarrow}a]]^p$ en décomposant par bits le vecteur $[[^{\rightarrow}a]]^p$ d'un partage partagé de secret (k, n) conjointement avec (n-1) appareils de traitement distribués (100-r), où n est un entier quelconque supérieur ou égal à 3, $[[x]]^y$ désigne un partage obtenu en distribuant un élément mod y x par un partage de secret (k, n), P est un nombre premier et L est une longueur de bit maximale d'une donnée à stocker ;

une unité d'acquisition de somme logique (103) configurée pour obtenir une somme logique $[[A_i]]^2$ de tous les éléments pour un vecteur $[[^{\rightarrow}a_i]]$ à chaque position de bit de la représentation de bits $[[^{\rightarrow}a]]^{2^L}$ conjointement avec les (n-1) appareils de traitement distribués (100-r), où $0 \leq i < L-1$ ;

une unité d'acquisition de quantité de décalage (105) configurée pour recevoir la somme logique $[[A_i]]^2$ et pour obtenir un partage $<<\rho>>^p$ obtenu en distribuant une quantité de décalage $\rho$ pour décaler le bit le plus significatif d'un vecteur $[[^{\rightarrow}A]]^2 = [[A_0]]^2, ..., [[A_{L-1}]]^2$ à une position fixe par un partage de secret (k, n) répliqué par un module p conjointement avec les (n-1) appareils de traitement distribués (100-r), où $<<x>>^y$ désigne un partage obtenu en distribuant un élément mod y x par un partage de secret (k, n) répliqué ; et

une unité de décalage (107) configurée pour obtenir un vecteur $[[2^\rho {^\rightarrow}a]]^p$ dans lequel chaque élément du vecteur $[[^{\rightarrow}a]]^p$ est décalé à gauche de $\rho$ bits, en utilisant le vecteur $[[^{\rightarrow}a]]^p$ et le partage $<<\rho>>^p$ conjointement avec les (n-1) appareils de traitement distribués, où p est le nombre de bits de P.

**5.** Procédé de normalisation MSB sécurisé utilisant un système de normalisation MSB sécurisé comprenant n appareils de traitement distribués, où n est un entier quelconque supérieur ou égal à 3, dans lequel

chacun des n appareils de traitement distribués comprend une unité de décomposition de bits, une unité d'acquisition de somme logique, une unité d'acquisition de quantité de décalage et une unité de décalage, le procédé comprenant :

le fait d'amener les n unités de décomposition de bits à effectuer une étape de décomposition de bits (S101) consistant à décomposer un vecteur $[[^{\rightarrow}a]]^P$ d'un partage partagé de secret (k, n) en bits et à obtenir une représentation de bits $[[^{\rightarrow}a]]^{2^L}$ du vecteur $[[^{\rightarrow}a]]^p$ où $[[x]]^y$ désigne un partage obtenu en distribuant un élément mod y x par un partage de secret (k, n), P est un nombre premier et L est une longueur de bit maximale d'une donnée à stocker ;

le fait d'amener les n unités d'acquisition de somme logique à effectuer une étape d'acquisition de somme logique (S103) consistant à obtenir une somme logique $[[A_i]]^2$ de tous les éléments pour un vecteur $[[\rightarrow a_i]]$ à chaque position de bit de la représentation de bits $[[\rightarrow a]]^{2\wedge L}$, où $0 \leq i < L-1$ ;

le fait d'amener les n unités d'acquisition de quantité de décalage à effectuer une étape d'acquisition de quantité de décalage (S105) consistant à recevoir la somme logique $[[A_i]]^2$ et à obtenir un partage $<<\rho>>^p$ obtenu en distribuant une quantité de décalage $\rho$ pour décaler le bit le plus significatif d'un vecteur $[[\rightarrow A]]^2 = ([[A_0]]^2, ..., [[A_{L-1}]]^2)$ à une position fixe par un partage de secret (k, n) répliqué par un module p où $<<x>>^y$ désigne un partage obtenu en distribuant un élément mod y x par un partage de secret (k, n) répliqué, et

le fait d'amener les n unités de décalage à effectuer une étape de décalage (S107) consistant à obtenir un vecteur $[[2^{\rho}\rightarrow a]]^p$ dans lequel chaque élément du vecteur $[[\rightarrow a]]^p$ est décalé à gauche de $\rho$ bits en utilisant le vecteur $[[\rightarrow a]]^p$ et le partage $<<\rho>>^p$, où p est le nombre de bits de P.

6. Procédé de normalisation MSB sécurisé selon la revendication 5, dans lequel

un vecteur $[[2^{\rho\_a}\rightarrow a]]^P$ après le décalage du bit le plus significatif à une position fixe à partir d'un vecteur de point fixe $[[\rightarrow a]]^P$, une quantité de décalage $<<\rho_a>>^p$, un vecteur $[[2^{\rho\_b}\rightarrow b]]^P$ après le décalage du bit le plus significatif à une position fixe à partir d'un vecteur de point fixe $[[\rightarrow b]]^P$, et une quantité de décalage $<<\rho_b>>^p$ sont obtenus, et chacun des n appareils de traitement distribués comprend une unité de conversion de module, une unité de calcul de somme de produit, une unité de conversion de partage de secret, une unité de décalage gauche et droit sécurisé de quantité de décalage, le procédé comprenant en outre :

le fait d'amener les n unités de conversion de module à effectuer une étape de conversion de module (S109) consistant à obtenir $[[\rho_a]]^Q$, $[[\rho_b]]^Q$ par une conversion mod p $\rightarrow$ mod Q à partir de $<<\rho_a>>^p$, $<<\rho_b>>^p$,

le fait d'amener les n unités de calcul de somme de produit à effectuer une étape de calcul de somme de produit (S111) consistant à calculer $[[c]]^P := [[\Sigma_{0 \leq i_m} 2^{\rho\_a} a_i 2^{\rho\_b} b_i]]^P$, où m représente la longueur de vecteur,

le fait d'amener les n unités de conversion de partage de secret à effectuer une étape de conversion de partage de secret (S113) consistant à calculer $[[-\rho_a-\rho_b]]^Q$ à partir de $[[\rho_a]]^Q$ et $[[\rho_b]]^Q$, et à obtenir un partage de secret (k, n) répliqué $<<-\rho_a-\rho_b>>^Q$ par une transformation de partage de secret, et

le fait d'amener les n unités de décalage gauche et droit sécurisé de quantité de décalage à effectuer une étape de décalage gauche et droit sécurisé de quantité de décalage (S115) consistant à recevoir un partage $[[c]]^P$ d'une somme de produit et un partage $<<-\rho_a-\rho_b>>^Q$ d'une quantité de décalage, et à décaler $[[c]]^P$ par $<<-\rho a-\rho_b>>^Q$ bits.

7. Procédé de normalisation MSB sécurisé selon la revendication 5, dans lequel

un vecteur $[[\rightarrow a']]^P$ après le décalage du bit le plus significatif à partir d'un vecteur de point flottant $([[\rightarrow a]]^P, [[\rightarrow \rho_a]]^Q)$, une quantité de décalage $<<\rho'_a>>^P$, un vecteur $[[\rightarrow b']]^P$ après le décalage du bit le plus significatif à partir d'un vecteur de point flottant $([[\rightarrow b]]^P, [[\rightarrow \rho_b]]^Q)$, et une quantité de décalage $<<\rho'_b>>^p$ sont obtenus, et chacun des n appareils de traitement distribués comprend une unité de conversion de module, une unité d'unification d'indice et une unité de somme de produit, le procédé comprenant en outre :

le fait d'amener les n unités de conversion de module à effectuer une étape de conversion de module (S117) consistant à convertir le $<\rho'_a>^p$ et le $<\rho'_b>^p$ en mod p $\rightarrow$ mod Q pour obtenir $[[\rho_a']]^Q$ et $[[\rho_b']]^Q$,

le fait d'amener les n unités d'unification d'indice à effectuer une étape d'unification d'indice (S119) consistant à obtenir des vecteurs et des parties d'exposant $([[\rightarrow a'']]^P, [[\rho a']]^Q)$ et $([[\rightarrow b'']]^P, [[\rho_b']]^Q)$ obtenus en unifiant des parties d'exposant de $([[\rightarrow a']]^P, [[\rightarrow \rho a-\rho_{a'}]]^Q)$ et $([[\rightarrow b']]^P, [[\rightarrow \rho b-_{b'}]]^Q)$ en utilisant des parties d'exponent $[[\rightarrow \rho a]]^Q$ et $[[\rightarrow \rho b]]^Q$ des vecteurs de point flottant $([[\rightarrow a]]^P, [[\rightarrow \rho a]]^Q)$ et $([[\rightarrow b]]^P, [[\rightarrow \rho_b]]^Q)$, les vecteurs $[[\rightarrow a']]^P$ et $[[\rightarrow b']]^P$ après le décalage du bit le plus significatif, et les quantités de décalage $[[\rho a']]^Q$ et $[[\rho b']]^Q$ après la conversion mod p $\rightarrow$ mod Q, et

le fait d'amener les n unités de somme de produit à effectuer une étape de somme de produit (S121) consistant à calculer $[[c]]^P := [[\Sigma_{0 \leq i_m} a''_i b''_i]]^P$, où m représente la longueur de vecteur, et à obtenir $[[c]]^P$, $[[\rho_{a'} + \rho_{b'}]]^Q$.

8. Programme amenant un ordinateur à fonctionner en tant qu'appareil de traitement distribué selon la revendication 4.

Fig. 1

100-0 DISTRIBUTED PROCESSING APPARATUS

...

100-(n-1) DISTRIBUTED PROCESSING APPARATUS

Fig. 2

Fig. 3

100-r

BIT
DECOMPOSITION
UNIT
101

LOGICAL SUM
ACQUISITION UNIT
103

SHIFT AMOUNT
ACQUISITION UNIT
105

SHIFT UNIT
107

Fig. 4

Fig. 5

100-r

BIT DECOMPOSITION UNIT — 101

MODULUS CONVERSION UNIT — 109

LOGICAL SUM ACQUISITION UNIT — 103

PRODUCT SUM COMPUTATION UNIT — 111

SHIFT AMOUNT ACQUISITION UNIT — 105

SECRET SHARING CONVERSION UNIT — 113

SHIFT UNIT — 107

SHIFT AMOUNT SECRET LEFT AND RIGHT SHIFT UNIT — 115

Fig. 6

start

S101
BIT DECOMPOSITION

S103
LOGICAL SUM ACQUISITION

S105
SHIFT AMOUNT ACQUISITION

S107
SHIFT

S117
MODULUS TRANSFORMATION

S119
INDEX UNIFICATION

S121
SUM OF PRODUCTS

end

Fig. 7

100-r

BIT
DECOMPOSITION UNIT
101

MODULUS
CONVERSION UNIT
117

LOGICAL SUM
ACQUISITION UNIT
103

INDEX
UNIFYING UNIT
119

SHIFT AMOUNT
ACQUISITION UNIT
105

PRODUCT
SUM UNIT
121

SHIFT UNIT
107

Fig. 8

|  | passive | | | | active | | | |
|---|---|---|---|---|---|---|---|---|
| NUMBER OF ITEMS | 1000 | ONE MILLION | TEN MILLION | NUMBER OF ROUNDS | 1000 | ONE MILLION | TEN MILLION | NUMBER OF ROUNDS |
| VECTOR MSB NORMALIZATION | 0. 23 | 19. 03 | 17. 53 | 14 | 0. 07 | 5. 56 | 5. 41 | 24 |
| FIXED-POINT MATRIX MULTIPLICATION | 0. 03 | 9. 58 | 10. 33 | 102 | 0. 002 | 0. 93 | 1. 59 | 123 |
| FLOATING POINT MATRIX MULTIPLICATION | 0. 03 | 7. 01 | 7. 05 | 123 | 0. 003 | 0. 63 | 1. 35 | 152 |

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAKASHI NISHIDE** ; **TAKUMA AMADA et al.** Multiparty Computation for Floating Point Arithmetic with Less Communication over Small Fields. *Transactions of the Information Processing Society of Japan*, 2019, vol. 60 (9), 1433-1447
- **RANDMETS, J**. Programming Languages for Secure Multi-party Computation Application Development. *PhD thesis. University of Tartu.*, 2017
- **FATTANEH BAYATBABOLGHANI et al.** *Secure Fingerprint Alignment and Matching Protocols*, 10 February 2017
- **KIKUCHI, R** ; **IKARASHI, D** ; **MATSUDA, T.** ; **HAMADA, K.** ; **CHIDA, K**. Efficient Bit-Decomposition and Modulus-Conversion Protocols with an Honest Majority. *Information Security and Privacy - 23rd Australasian Conference, ACISP 2018*, 11 July 2018

- Proceedings. Lecture Notes in Computer Science. Springer, vol. 10946, 64-82
- **DAI IGARASHI** ; **KOKI HAMADA** ; **RYO KIKUCHI** ; **KOJI CHIDA**. Improvement of secure computation radix sort aiming at statistical processing of Internet environment response 1 second. *SCIS 2014 The 31st Symposium on Cryptography and Information Security*
- **TAKASHI NISHIDE** ; **TAKUMA AMADA**. Multi-party calculation for floating point arithmetic with reduced traffic. *IPSJ Journal*, 2019, vol. 60 (9), 1433-1447